(19) **Europäisches Patentamt / European Patent Office / Office européen des brevets**

(11) **EP 4 245 107 B1**

(12) # EUROPÄISCHE PATENTSCHRIFT

(45) Veröffentlichungstag und Bekanntmachung des Hinweises auf die Patenterteilung:
**30.04.2025 Patentblatt 2025/18**

(21) Anmeldenummer: **23161524.6**

(22) Anmeldetag: **13.03.2023**

(51) Internationale Patentklassifikation (IPC):
**A01B 69/04** (2006.01) **G05D 1/00** (2024.01)

(52) Gemeinsame Patentklassifikation (CPC):
**A01B 69/008; G05D 1/0219**

(54) **VERFAHREN ZUR FAHRROUTENOPTIMIERUNG**

METHOD FOR OPTIMIZING DRIVING ROUTE

PROCÉDÉ D'OPTIMISATION D'ITINÉRAIRE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.03.2022 DE 102022105920**

(43) Veröffentlichungstag der Anmeldung:
**20.09.2023 Patentblatt 2023/38**

(73) Patentinhaber:
- **Lemken GmbH & Co KG**
  **46519 Alpen (DE)**
- **KRONE Agriculture SE**
  **48480 Spelle (DE)**

(72) Erfinder:
- **Grever, Alexander**
  **49074 Osnabrück (DE)**

- **Mählmann-Dunker, Hannes**
  **27251 Neuenkirchen (DE)**
- **Haverkamp, Stefan**
  **48346 Ostbevern (DE)**

(74) Vertreter: **Weeg, Thomas et al**
**Busse & Busse**
**Patent- und Rechtsanwälte Partnerschaft**
**Großhandelsring 6**
**49084 Osnabrück (DE)**

(56) Entgegenhaltungen:
| | |
|---|---|
| **EP-A1- 3 508 045** | **EP-A1- 3 591 488** |
| **EP-A2- 1 602 267** | **WO-A1-2021/025108** |
| **DE-A1- 102016 121 523** | **US-A1- 2018 359 904** |
| **US-A1- 2019 208 695** | |

**Beschreibung**

Die vorliegende Erfindung betrifft ein Verfahren zur Fahrroutenoptimierung nach dem Oberbegriff von Anspruch 1, ein Computersystem zur Fahrroutenoptimierung nach dem Oberbegriff von Anspruch 14 eine Landmaschine nach dem Oberbegriff von Anspruch 16 sowie ein Computerprogrammprodukt nach Anspruch 17.

Bei der Bearbeitung einer landwirtschaftlichen Nutzfläche, zum Beispiel eines gegebenen Flurstücks, fährt eine Landmaschine die gesamte Fläche in mehreren Fahrspuren nach und nach ab. Zum Wechsel zwischen den parallelen Fahrspuren sind Wendewege notwendig, die zusammen mit den Strecken in den Fahrspuren die gesamte Fahrroute bilden. Für eine effiziente Bearbeitung ist die Planung der Fahrroute bzw. die Wahl einer Fahrstrategie notwendig. Dabei können drei unterschiedliche Parameter bzw. Parametergruppen unterschieden werden: die Ausrichtung der (parallelen) Fahrspuren, die Positionen der Fahrspuren sowie die Reihenfolge, in der die Fahrspuren abgefahren werden sollen.

Die Wahl und Definition einer Fahrstrategie basiert bei einer rein menschlichen Planung auf den gesammelten Erfahrungen des Maschinenbedieners. Bei einer automatisierten bzw. unterstützenden Planung werden die folgenden Elementarschritte unabhängig voneinander und zum Teil auch nur einzeln durchgeführt. In einem ersten Schritt wird eine Ausrichtung unter Berücksichtigung eines Optimierungskriteriums (zum Beispiel Minimierung der Anzahl an Wendemanövern) gewählt. Dies erfolgt durch das Lösen eines mathematischen Optimierungsproblems. In einem zweiten Schritt wird die Reihenfolge ermittelt, in der Fahrspuren abgefahren werden sollen, zum Beispiel mit dem Ziel, die zurückgelegte Distanz oder die notwendige Zeit der Maschine im Vorgewende zu minimieren. Dies erfolgt durch das Lösen eines kombinatorischen Optimierungsproblems. Eine derartige automatisierte Planung und Definition einer Fahrstrategie erfolgt entweder durch eine Softwarekomponente innerhalb eines Farm-Management-Informationssystems oder als fahrzeugnahe Komponente in Form eines Features eines klassischen Lenksystems.

Die EP 1 602 267 A2 offenbart ein Routenplanungssystem für landwirtschaftliche Arbeitsmaschinen, wobei der landwirtschaftlichen Arbeitsmaschine eine definierte Arbeitsbreite zur Generierung von Fahrtrouten in einem Territorium zugeordnet ist und wobei das Routenplanungssystem eine dynamische Anpassung der geplanten Fahrtroute umfasst. Insbesondere kann die geplante Fahrtroute in Abhängigkeit von der Maschinen-Ist-Position und der Maschinen-Ist-Ausrichtung dynamisch angepasst werden. Des Weiteren kann die Fahrtroute aus einer Vielzahl von Fahrstrecken gebildet werden, die nach Optimierungskriterien ermittelt werden, wobei die Wahl einer abzuarbeitenden nächsten Fahrstrecke von Optimierungskriterien bestimmt wird.

Die EP 3 591 488 A1 offenbart ein System zur Fahrroutenbestimmung, mit einer Routenerzeugungseinheit, die geplante Fahrrouten erzeugt, die eine Mehrzahl von Arbeitsrouten enthalten, entlang derer ein Arbeitsfahrzeug veranlasst wird, eine autonome Fahrt durchzuführen, einer Steuereinheit, die das Arbeitsfahrzeug zu veranlasst, eine autonome Fahrt entlang jeder der geplanten Fahrtrouten durchzuführen, einer Informationssammeleinheit, die Positionsinformationen und Orientierungsinformationen über das Arbeitsfahrzeug sammelt, und einer Bestimmungseinheit, die eine Kandidatenroute für eine autonome Fahrt bestimmt, auf der das Arbeitsfahrzeug eine autonome Fahrt beginnen darf, bevor das Arbeitsfahrzeug eine autonome Fahrt beginnt.

Die US 2019/0208695 A1 zeigt ein Verfahren zur automatischen Routenplanung zur Optimierung der Route einer Maschine in einem Gebiet. Es werden als Parameter die Koordinaten einer Flächenkontur, eine Arbeitsbreite der Maschine, sowie ein Abstand zwischen der Flächenkontur und einer randseitigen geschlossenen Maschinenroute innerhalb der Flächenkontur berücksichtigt. Durch Berücksichtigung des Abstands wird aus der Flächenkontur eine erodierte Flächenkontur ermittelt. Es wird eine Ausrichtung von Fahrspuren innerhalb eines Innenraums der erodierten Flächenkontur ausgewählt, die als innere Fahrspuren bezeichnet werden. Durch Schneiden der inneren Fahrspuren mit der Kontur des erodierten Bereichs, werden ein Fahrspurengitter und ein entsprechender zusammenhängender ungerichteter Übergangsgraph des Bereichs erzeugt. Weiterhin wird ein mathematischer Algorithmus durchgeführt zum Bestimmen einer kürzesten Route unter Berücksichtigung mindestens der genannten Parameter, der erodierten Fläche und des bereitgestellten Fahrspurengitters.

Die DE 10 2016 121 523 A1 betrifft ein Verfahren zum prädiktiven Erzeugen von Daten zur Steuerung eines Fahrweges und eines Betriebsablaufes für ein landwirtschaftliches Fahrzeug und eine landwirtschaftliche Maschine. Dabei erfolgt ein automatisches Erfassen und Speichern von Fahrzeug- und/oder Maschinendaten über eine an Einzelfahrzeugen und/oder Einzelmaschinen angeordnete Sensoreinrichtung zum Erzeugen eines Fahrzeug- und Maschinenmodells. Das Fahrzeug- und Maschinenmodell wird auf ein dreidimensionales prädiktives Geländemodell abgebildet und es werden Fahrwegsteuerdaten zum Festlegen eines Fahrweges und/oder Maschinensteuerdaten zur Steuerung von Maschinenkomponenten errechnet.

Die WO 2021/025108 A1 offenbart ein automatisches Fahrsystem für ein Arbeitsfahrzeug. Das Fahrsystem umfasst ein Messteil, das eine Position und eine Orientierung des Arbeitsfahrzeugs misst, sowie ein automatisches Fahrsteuerteil, das in einem Arbeitszustand eine Fahrsteuerung gemäß parallelen Pfaden durchführt. Ein Abweichungserfassungsteil erfasst eine Winkelabweichung und eine seitliche Abweichung des Arbeitsfahrzeugs relativ zu den parallelen Pfaden zu einem Zeitpunkt, an dem das Arbeitsfahrzeug den Eingangsbereich erreicht. Sofern eine Startbedingung der Fahrsteuerung nicht erfüllt ist, wird eine Positionsanpassungsfahrt durch einen Vorgang ausgeführt, der einen Vorwärts-Rückwärts-Fahrtrichtungswechsel und einen Lenkvorgang des Arbeitsfahrzeugs kombiniert.

Die EP 3 508 045 A1 offenbart ein autonomes Fahrsystem für ein Arbeitsfahrzeug, das sich während der Arbeit an einem Arbeitsort bewegt. Das System umfasst ein Satellitenpositionierungsmodul, eine Bereichseinstelleinheit, die einen zu bearbeitenden Bereich am Arbeitsort einstellt, eine Routenverwaltungseinheit, die einen Fahrroutenelementsatz berechnet, der eine Aneinanderreihung mehrerer Fahrroutenelemente ist, die eine Fahrroute bilden, eine Fahrroutenelement-Auswahleinheit, die ein nächstes zu fahrendes Fahrroutenelement sequenziell aus dem Fahrroutenelement-Satz auswählt, und eine autonome Fahrsteuereinheit, die das Arbeitsfahrzeug veranlasst, auf der Grundlage des nächsten Fahrroutenelements und der Fahrzeugposition autonom zu fahren.

Aufgabe der Erfindung ist es, eine optimierte landwirtschaftliche Bearbeitung eines vorgegebenen Bearbeitungsbereichs zu ermöglichen.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren geschaffen zur Fahrroutenoptimierung bei einer Feldbearbeitung mit wenigstens einem Bearbeitungsschritt, bei welchem ein vorgegebener Bearbeitungsbereich von einer Landmaschine entsprechend einer Fahrroute mit einer Mehrzahl paralleler Fahrspuren durchfahren wird, wobei die Fahrroute charakterisierbar ist durch eine Ausrichtung der Fahrspuren, eine Positionierung, welche Positionen aller Fahrspuren festlegt, sowie eine Reihenfolge, in welcher die Fahrspuren durchfahren werden, wobei:

- für wenigstens einen Bearbeitungsschritt eine automatische Optimierung der Reihenfolge für jede einer Mehrzahl von Kombinationen aus jeweils einer Ausrichtung und einer Positionierung durchgeführt wird, indem aus einer Mehrzahl von Reihenfolgen eine entsprechend einem definierten Optimierungskriterium zur Fahrroutenoptimierung für diese Kombination optimale Reihenfolge ermittelt wird;
- für wenigstens einen Bearbeitungsschritt eine automatische Optimierung der Fahrroute durchgeführt wird, indem aus der Mehrzahl von Kombinationen, unter Einbeziehung der für die jeweilige Kombination ermittelten optimalen Reihenfolge, eine entsprechend dem Optimierungskriterium optimale Kombination ermittelt wird, die einer optimalen Fahrroute für diesen Bearbeitungsschritt entspricht; und
- automatisch Steuerdaten zur Steuerung wenigstens einer Landmaschine während eines Bearbeitungsschritts erzeugt werden, wobei die Steuerdaten die optimale Fahrroute repräsentieren.

Das Verfahren ist zur Fahrroutenoptimierung bei einer Feldbearbeitung vorgesehen, welche Feldbearbeitung eine Mehrzahl von Bearbeitungsschritten umfasst. Der jeweilige Bearbeitungsschritt wird durch eine Landmaschine ausgeführt, wobei unterschiedliche Bearbeitungsschritte im Allgemeinen von unterschiedlichen Landmaschinen durchgeführt werden. Es können allerdings auch mehrere oder alle Arbeitsschritte durch die gleiche Landmaschine durchgeführt werden. Die Landmaschine kann auch als landwirtschaftliche Arbeitsmaschine bezeichnet werden. Dies schließt ausdrücklich auch Gespanne ein, mit einem Schlepper und wenigstens einer hiervon gezogenen Maschine und/oder einem Anhänger. Die Landmaschine kann insbesondere eine Erntemaschine wie ein Feldhäcksler, ein Mähdrescher, eine Ballenpresse oder ein Ladewagen sein. Es könnte sich aber auch zum Beispiel um einen Traktor mit einem Zetter, einem Pflug, einem Düngerstreuer, einem Güllefass oder dergleichen handeln.

Im Rahmen des Bearbeitungsschritts fährt die Landmaschine entsprechend einer Fahrroute, die eine Mehrzahl von parallelen Fahrspuren in einem Bearbeitungsbereich aufweist, zum Beispiel einem Acker, einem Feld oder einem Teil desselben, wobei zur Vereinfachung die Begriffe "Feld" und "Acker" nachfolgend gleichbedeutend verwendet werden. In diesem Bearbeitungsbereich erfolgt in der Regel die eigentliche Bearbeitung, zum Beispiel Pflügen, Düngen, Mähen, Zetten, Erntegutaufnahme oder dergleichen. Eine Fahrspur, welche auch als Bearbeitungsspur bezeichnet werden könnte, entspricht in diesem Zusammenhang einem Teil der Fahrroute der Landmaschine im Bearbeitungsbereich, wobei normalerweise vorgesehen ist, dass die gesamte oder zumindest überwiegende Fläche des Bearbeitungsbereichs nach und nach durch Abfahren einzelner Fahrspuren bearbeitet wird. Die Fahrspuren verlaufen parallel, das heißt, der Abstand zweier benachbarter Fahrspuren ist auf ihrer ganzen Länge konstant. Zur Fahrroute gehören neben den Fahrspuren innerhalb des Bearbeitungsbereichs allerdings auch Wendewege, die für Spurwechsel und/oder Wendeweg notwendig sind, wenn die Landmaschine von einer Fahrspur in eine andere wechselt, normalerweise in einem Vorgewende, das an den Bearbeitungsbereich angrenzt und genauer gesagt randseitig desselben ausgebildet ist. Ein derartiges Vorgewende kann beispielsweise außerhalb des Feldes liegen oder es kann sich um einen Randbereich des Feldes handeln, der zu Beginn der Bearbeitung vorab bearbeitet, beispielsweise abgeerntet, wird oder unter Umständen auch danach, was auch von der Art der Bearbeitung abhängen kann.

Insgesamt kann die Fahrroute charakterisiert werden durch eine Ausrichtung der Fahrspuren, eine Positionierung, welche Positionen aller Fahrspuren festlegt, sowie eine Reihenfolge, in welcher die Fahrspuren durchfahren werden. Im Falle gerader Fahrspuren entspricht die Ausrichtung einem Horizontalwinkel oder Azimutalwinkel, man könnte auch sagen, einer Himmelsrichtung, in welcher sämtliche Fahrspuren verlaufen. Es versteht sich, dass statt einer Winkelangabe in Grad auch andere Angaben verwendet werden könnten, die eine eindeutige Zuordnung erlauben. Die Ausrichtung legt allerdings nicht die Positionen der einzelnen Fahrspuren fest. Dies geschieht durch die Positionierung. Eine Möglichkeit ist, dass die Positionierung für jede Fahrspur zweidimensionale Koordinaten eines Punktes enthält, durch den die jeweilige Fahrspur führt. Zusammen mit der Ausrichtung ist somit die Anordnung der Fahrspur vollständig festgelegt. In aller Regel ist allerdings der Abstand oder der seitliche Versatz zueinander benachbarter Fahrspuren für alle Fahrspuren identisch und entspricht einer Spurbreite, die der effektiven Bearbeitungsbreite der Landmaschine entsprechen kann, also der Breite, die quer zur Fahrtrichtung effektiv bearbeitet werden kann. Im Falle eines Mähdreschers oder eines Feldhäckslers wäre dies beispielsweise die Breite des Erntevorsatzes, insbesondere abzüglich einer Sicherheitsmarge von wenigen Zentimetern. Im Falle einer Ballenpresse oder eines Ladewagens entspricht die Breite der Spur üblicherweise der Arbeitsbreite des vorangegangenen Prozesses, wie zum Beispiel Schwaden oder Mähen mit Schwadablage. Somit lassen sich die Positionen sämtlicher Fahrspuren unter Kenntnis der Spurbreite durch einen einzigen Punkt einer Fahrspur festlegen, durch dessen zweidimensionalen Koordinaten die Positionierung ausgedrückt werden kann. Schließlich lässt sich die Fahrroute durch die Reihenfolge charakterisieren, in der die, insbesondere durch Ausrichtung und Positionierung räumlich festgelegten, Fahrspuren durchfahren werden. Hierdurch können verschiedene Fahrstrategien dargestellt werden, beispielsweise dass die Landmaschine von einer Fahrspur in die jeweils räumlich nächste Fahrspur wechselt oder auch in die übernächste, über übernächste etc... Beispielsweise bei unregelmäßig geformten Bearbeitungsbereichen kann es auch sinnvoll sein, dass in einem Teilbereich ein Wechsel in die nächste Fahrspur erfolgt, während in einem anderen Teilbereich ein Wechsel in die übernächste Fahrspur erfolgt, o.ä. Hinsichtlich der Datenmenge lässt sich die Reihenfolge von N Fahrspuren durch ein N-Tupel, beispielsweise einen N-dimensionalen Vektor, ausdrücken.

Das Verfahren weist die nachfolgend genannten Schritte auf, wobei diese ausdrücklich nicht zwangsläufig in der genannten Reihenfolge ausgeführt werden müssen. Die zeitliche Abfolge zweier Schritte kann gegenüber der Reihenfolge ihrer Nennung umgekehrt sein. Ebenso ist es möglich, dass zwei Schritte ganz oder teilweise zeitlich parallel ausgeführt werden.

In einem Verfahrensschritt wird für wenigstens einen Bearbeitungsschritt eine automatische Optimierung der Reihenfolge für jede einer Mehrzahl von Kombinationen aus jeweils einer Ausrichtung und einer Positionierung durchgeführt, indem aus einer Mehrzahl von Reihenfolgen eine entsprechend einem definierten Optimierungskriterium zur Fahrroutenoptimierung für diese Kombination optimale Reihenfolge ermittelt wird. Das heißt, es wird für den jeweiligen Bearbeitungsschritt eine Mehrzahl von möglichen Kombinationen betrachtet, wobei jede Kombination aus einer Ausrichtung und einer Positionierung besteht oder diese miteinander kombiniert. Für jede dieser Kombinationen, welche insbesondere die räumliche Anordnung der Fahrspuren jeweils vollständig festlegt, wird eine Optimierung der Reihenfolge durchgeführt, indem aus einer Mehrzahl von Reihenfolgen eine im Hinblick auf das Optimierungskriterium optimale Reihenfolge ermittelt wird. Es wird also eine Mehrzahl von Reihenfolgen betrachtet, die Kandidaten für eine optimale Reihenfolge darstellen, und es wird anhand des einen Optimierungskriteriums zur Fahrroutenoptimierung untersucht, welche dieser Reihenfolgen für die jeweilige Kombination, insbesondere aus Ausrichtung und Positionierung, optimal ist. Die Optimierung erfolgt automatisch, also maschinell oder computergestützt. Soweit hier und im Folgenden der Begriff "automatisch" verwendet wird, schließt dies insbesondere die Möglichkeit ein, dass die entsprechenden Vorgänge ganz oder teilweise durch Software durchgeführt werden, die auf einer geeigneten Hardware implementiert ist. Dieser Schritt sowie weitere Schritte des Verfahrens können zum Beispiel durch ein Farm-Management-Informationssystem (FMIS) durchgeführt werden.

Prinzipiell könnten für die Optimierung sämtliche denkbaren Reihenfolgen untersucht werden, also bei N Fahrspuren N! Reihenfolgen. Viele dieser theoretisch denkbaren Reihenfolgen können allerdings von vornherein ausgeschlossen werden, beispielsweise eine Reihenfolge mit mehreren Spurwechseln in jeweils weit entfernte Spuren oder dergleichen, wodurch sich der Rechenaufwand deutlich reduziert. Diese Optimierung der Reihenfolge wird für jede der Mehrzahl von Kombinationen durchgeführt, wobei sich im Allgemeinen für unterschiedliche Kombinationen unterschiedliche optimale Reihenfolgen ergeben können. Sofern dieser Verfahrensschritt für mehrere Bearbeitungsschritte durchgeführt wird, können für verschiedene Bearbeitungsschritte unterschiedliche Kombinationen von Ausrichtung und Positionierung zugrunde gelegt werden. Selbst wenn dies nicht der Fall ist, ergeben sich für unterschiedliche Bearbeitungsschritte in der Regel unterschiedliche optimale Reihenfolgen, allein schon deshalb, weil unterschiedliche Landmaschinen mit unterschiedlichen Spurbreiten arbeiten und somit ein und dieselbe Positionierung zu unterschiedlichen Anzahlen von Fahrspuren führt. Außerdem kann sich beispielsweise der Wenderadius unterschiedlicher Landmaschinen unterscheiden, so dass eine bestimmte Art von Spurwechsel für eine Landmaschine effizient sein kann, während sie für eine andere Landmaschine ineffizient oder sogar unmöglich ist.

Des Weiteren wird für wenigstens einen Bearbeitungsschritt eine automatische Optimierung der Fahrroute durchgeführt, indem aus der Mehrzahl von Kombinationen, unter Einbeziehung der für die jeweilige Kombination ermittelten optimalen Reihenfolge, eine entsprechend dem Optimierungskriterium optimale Kombination ermittelt wird, die einer optimalen Fahrroute für diesen Bearbeitungsschritt entspricht.

Während die Optimierung der Reihenfolge als Optimierung auf einer unteren Ebene angesehen werden kann, kann die Optimierung der Fahrroute als eine Optimierung auf einer oberen oder höheren Ebene angesehen werden, wobei man hier und im Folgenden statt von "Ebenen" auch von "Optimierungsebenen" sprechen kann. Dabei wird ermittelt, welche der Mehrzahl der Kombinationen aus Ausrichtung und Positionierung, zusammen mit der hierfür ermittelten optimalen Reihenfolge, gemäß dem Optimierungskriterium als optimal anzusehen ist. Es versteht sich, dass der o.g. Schritt, bei welchem die optimale Reihenfolge ermittelt wird, für eine bestimmte Kombination ausgeführt worden sein muss, bevor diese Kombination mit anderen Kombinationen diesbezüglich verglichen werden kann. Allerdings ist es nicht notwendig, dass zunächst die Gesamtmenge aller zu betrachtenden Kombinationen festgelegt wird. Beispielsweise wäre es denkbar, dass zunächst mit einem vergleichsweise groben Raster der Gesamtbereich aller Kombinationen abgedeckt wird, wobei beispielsweise die Ausrichtung in 10°-Schritten variiert wird und die Positionierung in 50cm-Schritten. Danach könnte ein Bereich, welcher sich als vorteilhaft gegenüber anderen Bereichen herausgestellt hat, mit einem feineren Raster untersucht werden, wobei beispielsweise die Ausrichtung in 1°-Schritten variiert wird und die Positionierung in 10cm-Schritten. Die so ermittelte optimale Kombination entspricht zusammen mit der zugehörigen optimalen Reihenfolge einer optimalen Fahrroute für diesen Bearbeitungsschritt. Sofern mehrere Bearbeitungsschritte erfolgen, unterscheidet sich die optimale Fahrroute in den unterschiedlichen Bearbeitungsschritten normalerweise. Der Begriff "optimale Fahrroute" ist so zu verstehen, dass dies die beste Fahrroute ist, die entsprechend dem Optimierungskriterium aufgefunden wurde. Unter Umständen könnte tatsächlich eine bessere Fahrroute existieren, die allerdings nicht aufgefunden wurde, beispielsweise weil nicht genügend Kombinationen von Ausrichtung und Positionierung untersucht wurden.

Bei jeder automatischen Optimierung können unterschiedliche Verfahren zur Auffindung der optimalen Lösung, oder zur Suche nach der optimalen Lösung, eingesetzt werden, insbesondere metaheuristische Verfahren wie Simulated Annealing, genetische oder evolutionäre Algorithmen.

In einem weiteren Verfahrensschritt werden automatisch Steuerdaten zur Steuerung wenigstens einer Landmaschine während eines Bearbeitungsschritts erzeugt, welche Steuerdaten die optimale Fahrroute repräsentieren. Die Steuerdaten enthalten in jedem Fall die Informationen, die zum Steuern der Landmaschine entlang der optimalen Fahrroute notwendig sind. In dem entsprechenden Bearbeitungsschritt kann die Landmaschine entsprechend der Steuerdaten gesteuert werden. Der Begriff "steuern" bezieht sich hier allgemein auf jede gezielte Beeinflussung von Ausrichtung und/oder Bewegungszustand der Landmaschine, also zum Beispiel Lenken, Beschleunigen, Abbremsen etc. Die Landmaschine kann also anhand der Steuerdaten so gesteuert werden, dass sie idealerweise der ermittelten optimalen Fahrroute folgt. Das Format der Steuerdaten sowie deren Inhalt können unterschiedlich gewählt werden, insbesondere in Abhängigkeit von der jeweiligen Landmaschine sowie ggf. weiteren zur Umsetzung des Verfahrens eingesetzten Komponenten. Insbesondere kann die Fahrroute durch eine mehr oder weniger dichte Folge von Wegpunkten repräsentiert sein. Es können auch explizite Lenkanweisungen in den Steuerdaten enthalten sein, oder lediglich Positionsangaben für Wegpunkte, wobei auf Seiten der Landmaschine die passenden Lenkparameter ermittelt werden, um von einem Wegpunkt zum nächsten zu gelangen. Es versteht sich, dass Steuerdaten für eine Mehrzahl von Landmaschinen für jeweils einen Bearbeitungsschritt und/oder für eine Landmaschine für eine Mehrzahl von Bearbeitungsschritten erzeugt werden können. Im Falle mehrerer Bearbeitungsschritte können die optimalen Fahrrouten für einzelne Bearbeitungsschritte voneinander abweichen.

Erfindungsgemäß enthält die Mehrzahl von Kombinationen unterschiedliche Kombinationen einer einzigen Ausrichtung mit unterschiedlichen Positionierungen. Das heißt, es besteht keine eindeutige Zuordnung zwischen der Ausrichtung und der Positionierung, sondern ein und dieselbe Ausrichtung wird mit unterschiedlichen Positionierungen kombiniert, wobei die sich hieraus ergebenden unterschiedlichen Kombinationen im Rahmen der Optimierung miteinander verglichen werden können. Dies bildet einen Unterschied zu Verfahren im Stand der Technik, bei welchen im Rahmen einer Optimierung zwar unterschiedliche Ausrichtungen betrachtet werden, allerdings die jeweilige Ausrichtung gemäß einem festgelegten Kriterium mit einer bestimmten Positionierung kombiniert wird. Ein derartiges Kriterium ist normalerweise im Hinblick auf eine bestimmte Fahrspur definiert, beispielsweise derart, dass eine randseitige Fahrspur so positioniert ist, dass sich die Landmaschine unter Berücksichtigung ihrer individuellen Arbeitsbreite exakt am Rand des Bearbeitungsbereichs entlang bewegt, ohne dass sie also über den Bearbeitungsbereich hinausragt. Wenngleich eine solche Festlegung für die einzelne Fahrspur geeignet ist, kann sie dennoch unter Betrachtung der Gesamtheit aller Fahrspuren zu einer suboptimalen Lösung führen. Beispielsweise könnte sich durch diese Wahl am gegenüberliegenden Rand des Bearbeitungsbereichs eine extrem kurze, und daher in jedem Fall unökonomische, Fahrspur ergeben, welche beispielsweise nicht auftreten würde, wenn man auch in Kauf nimmt, dass die erstgenannte randseitige Fahrspur so verlagert wird, dass die Landmaschine seitlich über den Bearbeitungsbereich hinausragt. Das erfindungsgemäße Verfahren ist in der Lage, verschiedene mögliche Positionierungen bei ein und derselben Ausrichtung im Hinblick auf das Optimierungskriterium zu vergleichen und so unter diesen die Positionierung zu ermitteln, die in Kombination mit der fraglichen Ausrichtung optimal ist.

Bevorzugt basiert das Optimierungskriterium wenigstens teilweise auf einer Optimierung eines Optimierungswerts, der durch Aufsummieren von Beiträgen einzelner Routenabschnitte einer Fahrroute ermittelt wird. Der Optimierungswert kann in vielen Fällen auch als Aufwandswert oder Kostenwert bezeichnet werden, wobei die Optimierung des Optimierungswerts dann in einer Minimierung liegt. Es wäre allerdings auch denkbar, dass, je nach Art oder Definition des Optimierungswerts, die Optimierung in einer Maximierung desselben liegt. Im einfachsten Fall besteht das Optimierungskriterium in einer Minimierung oder Maximierung des Optimierungswerts. Das heißt, diejenige Fahrroute ist optimal, die den Optimierungswert optimiert. Wie nachfolgend noch erläutert wird, könnten aber auch andere Größen, zum Beispiel weitere Optimierungswerte, berücksichtigt werden, so dass die Optimierung des einen Optimierungswerts mit anderen Zielsetzungen konkurriert. In jedem Fall wird der Optimierungswert ermittelt, indem Beiträge einzelner Routenabschnitte einer Fahrroute aufsummiert werden. Jedem Routenabschnitt wird ein Beitrag zugeordnet, und falls die Fahrroute den Routenabschnitt enthält, wird der Beitrag bei der Ermittlung des Optimierungswerts hinzuaddiert. Falls zum Beispiel der Optimierungswert einer Fahrstrecke entspricht, die bei der Fahrroute durchfahren werden muss, entspricht der Beitrag eines Routenabschnitts der Länge desselben. Der Optimierungswert $W$ lässt sich wie folgt berechnen:

$$W = \sum_j W_j$$

wobei $W_j$ den Beitrag des j-ten Routenabschnitts darstellt und die Summe über j über alle Routenabschnitte läuft.

Im Falle mehrerer Bearbeitungsschritte können zudem Beiträge der Fahrrouten der Bearbeitungsschritte aufsummiert werden, so dass sich der Optimierungswert wie folgt berechnen lässt:

$$W = \sum_i W_i = \sum_{i,j} W_{ij}$$

wobei $W_{ij}$ den Beitrag des j-ten Routenabschnitts der i-ten Fahrroute darstellt und die Summe über i über alle Bearbeitungsschritte läuft.

Es ist bevorzugt, dass das Optimierungskriterium bei jeder Optimierung sowohl Routenabschnitte der Fahrspuren als auch Routenabschnitte von, die Fahrspuren verbindenden, Wendewegen berücksichtigt, wobei die Routenabschnitte der Wendewege in Abhängigkeit von der jeweiligen Reihenfolge berücksichtigt werden. Das heißt, falls zum Beispiel ein bestimmter Optimierungswert der Fahrroute zu minimieren oder zu maximieren ist, wird nicht nur der Beitrag der Fahrspuren zu diesem Optimierungswert betrachtet, sondern auch der Beitrag der Wendewege, die innerhalb der Fahrroute beim Wechsel von einer Fahrspur zur nächsten Fahrspur durchfahren werden müssen, und zwar in Abhängigkeit von der zugrunde gelegten Reihenfolge. Letztere beeinflusst zum Beispiel die zurückzulegende Fahrstrecke für einzelne Wendewege, insbesondere je nachdem, ob in eine benachbarte Spur, in eine nächste Spur, übernächste Spur etc. gewechselt wird, die benötigte Zeit, den Kraftstoffverbrauch und/oder andere Parameter. Das heißt, der Beitrag, der berücksichtigt wird, ist normalerweise nicht für alle möglichen Reihenfolgen konstant, sondern hängt von der jeweiligen Reihenfolge ab, das heißt, er ist eine Funktion der Reihenfolge. Dies schließt selbstverständlich nicht aus, dass der Beitrag für einige Reihenfolgen gleich sein kann. Diese Ausführungsform wird in der Regel mit der oben genannten Ausführungsform kombiniert, so dass das Optimierungskriterium wenigstens teilweise auf einer Optimierung eines Optimierungswerts basiert, der durch Aufsummieren von Beiträgen von Routenabschnitten der Fahrspuren sowie Routenabschnitten der Wendewege einer Fahrroute ermittelt wird, wobei die Beiträge der Routenabschnitte der Wendewege von der Reihenfolge abhängig sind.

Vorteilhaft berücksichtigt das Optimierungskriterium bei jeder Optimierung einen Routenabschnitt eines zwei Fahrspuren verbindenden Wendewegs wenigstens in Abhängigkeit einer Relativposition dieser Fahrspuren. Das heißt, es wird im Hinblick auf den Einfluss eines Wendewegs zumindest berücksichtigt, welche Position die verbundenen Fahrspuren relativ zueinander aufweisen. Die Relativposition kann zum Beispiel durch den Abstand der beiden Fahrspuren quer zur Ausrichtung ausgedrückt werden. Es kann auch sein, dass die beiden Fahrspuren, insbesondere deren Endpunkte, parallel zur Ausrichtung versetzt sind, wenn die Grenze des Bearbeitungsbereichs nicht senkrecht zur Ausrichtung verläuft. Über die Relativposition hinaus könnten auch die Absolutpositionen berücksichtigt werden, zum Beispiel weil die Bodenbeschaffenheit lokal unterschiedlich ist und sich auf den Wendeweg auswirkt, weil der zur Verfügung stehende Platz für den Wendeweg lokal unterschiedlich ist etc.

Eine Möglichkeit bei der Optimierung der Fahrroute besteht darin, dass die Ausrichtung, welche sich insbesondere durch eine einzige Winkelangabe charakterisieren lässt, sowie die Positionierung, welche sich insbesondere durch einen einzigen, insbesondere zweidimensionalen, Punkt im Bearbeitungsbereich charakterisieren lässt, als gleichberechtigte Variationsparameter behandelt werden.

Dadurch werden Fahrrouten verglichen, die sich unter Umständen sowohl in der Ausrichtung als auch in der Positionierung unterscheiden. Alternativ kann zunächst der eine Variationsparameter, beispielsweise die Ausrichtung oder die Positionierung, optimiert werden, während der andere festgehalten wird.

Eine derartige Ausgestaltung sieht vor, dass zur Optimierung der Fahrroute für jede einer Mehrzahl von Ausrichtungen eine optimale Positionierung aus einer Mehrzahl von Positionierungen ermittelt wird, und die optimale Kombination aus einer Mehrzahl von Kombinationen aus jeweils einer Ausrichtung und der hierzu ermittelten optimalen Positionierung ermittelt wird. Das heißt, es werden insgesamt eine Mehrzahl von Ausrichtungen betrachtet. Für jede dieser Ausrichtungen wird eine Mehrzahl von Positionierungen betrachtet und aus diesen wird eine optimale Positionierung ermittelt, was wiederum implizit die Ermittlung der optimalen Reihenfolge für jede Kombination aus der Ausrichtung mit einer der Positionierungen beinhaltet. Hierarchisch betrachtet wird also auf der unteren Ebene eine optimale Reihenfolge für eine Kombination aus Ausrichtung und Positionierung ermittelt. Dann wird auf einer mittleren Ebene eine optimale Positionierung zu einer bestimmten Ausrichtung ermittelt, wobei die auf der unteren Ebene ermittelte optimale Reihenfolge zugrunde gelegt wird. Auf einer oberen Ebene wird dann eine optimale Ausrichtung ermittelt, wobei die auf der mittleren sowie der unteren Ebene ermittelte optimale Positionierung und optimale Reihenfolge zugrunde gelegt werden. Bei der Suche nach einer optimalen Positionierung muss nicht der gesamte Bearbeitungsbereich in Betracht gezogen werden. Soweit die Positionierung wie oben beschrieben durch zweidimensionale Koordinaten eines einzigen Punktes charakterisiert ist, reicht es vielmehr aus, lediglich Punkte auf einer Geraden quer zur Ausrichtung in Betracht zu ziehen, und zwar entlang einer Strecke, die der Spurbreite entspricht. Verlagerungen in Richtung der Ausrichtung verändern die Positionierung nicht. Ebenso führt eine Verlagerung quer zur Ausrichtung um ein ganzzahliges Vielfaches der Spurbreite wieder zu einer identischen Positionierung. Beispielsweise reicht es bei einer Landmaschine mit einer Spurbreite von 8 m und einer Ausrichtung in Nord-Süd-Richtung aus, Positionen entlang einer 8 m langen Strecke in Ost-West-Richtung zu untersuchen.

Unabhängig davon, ob insgesamt nur ein Bearbeitungsschritt vorgesehen ist oder - was der Regelfall sein sollte - mehrere Bearbeitungsschritte, ist es möglich, dass bei der Optimierung der Fahrroute nur der einzelne Bearbeitungsschritt berücksichtigt wird. Allerdings besteht in der Realität ein Zusammenhang zwischen den einzelnen Bearbeitungsschritten, insbesondere deshalb, weil die Ausrichtung der Fahrspuren für sämtliche Bearbeitungsschritte gleich ist. Daneben können weitere Zusammenhänge bestehen, beispielsweise dadurch, dass jede Landmaschine beim Durchfahren des Bearbeitungsbereichs eine Bodenverdichtung bewirkt, die den hiervon betroffenen Bereich wesentlich beeinträchtigt. Insofern ist es günstig, wenn eine Landmaschine möglichst häufig soweit möglich mit ihren Rädern den gleichen Bereich durchfährt wie die vorhergehende Landmaschine, statt einen bislang unverdichteten Bereich zu verdichten. Aus diesen und anderen Gründen ist eine ganzheitliche Betrachtung mehrerer, insbesondere aller, Bearbeitungsschritte vorteilhaft. Eine vorteilhafte Ausgestaltung des Verfahrens sieht daher vor, dass das Optimierungskriterium jeden einer Mehrzahl von Bearbeitungsschritten berücksichtigt, so dass die Optimierung der Fahrroute für den jeweiligen Bearbeitungsschritt in Abhängigkeit von sämtlichen Bearbeitungsschritten erfolgt, wobei die Ausrichtung für alle Bearbeitungsschritte gleich ist. Die Fahrrouten in den einzelnen Bearbeitungsschritten sind also dadurch gekoppelt, dass die Ausrichtung in allen Bearbeitungsschritten gleich ist. Es könnte beispielsweise sein, dass eine Kombination, die in einem Bearbeitungsschritt für sich betrachtet äußerst vorteilhaft ist, eine Ausrichtung enthält, die in einem anderen Bearbeitungsschritt zwangsläufig zu einer stark nachteiligen Kombination führt. Diese Nachteile können vermieden werden, wenn bei der Optimierung der Fahrroute mehrere Bearbeitungsschritte berücksichtigt werden. Das entsprechende Optimierungskriterium ist dabei so formuliert, dass entsprechend eine Mehrzahl von Bearbeitungsschritten einfließen. Die einzelne Fahrroute einer Landmaschine kann in diesem Fall isoliert betrachtet suboptimal sein, führt allerdings in der Zusammenschau mit den Fahrrouten bei anderen Bearbeitungsschritten zu einem optimalen Gesamtergebnis. Eine mögliche Realisierung dieser Ausführungsform besteht darin, wie oben beschrieben einen Optimierungswert durch Aufsummieren von Beiträgen aus allen Bearbeitungsschritten zu bilden, und diesen Optimierungswert dann zu minimieren oder maximieren.

Alternativ zur oben beschriebenen Ausgestaltung, bei welcher zunächst die Ausrichtung festgehalten und die Positionierung optimiert wird, ist es ebenfalls möglich, dass zur Optimierung der Fahrroute für jede einer Mehrzahl von Positionierungen eine optimale Ausrichtung aus einer Mehrzahl von Ausrichtungen ermittelt wird, und die optimale Kombination aus einer Mehrzahl von Kombinationen aus jeweils einer Positionierung und der hierzu ermittelten optimalen Ausrichtung ermittelt wird. Das heißt, es werden insgesamt eine Mehrzahl von Positionierungen betrachtet. Für jede dieser Positionierungen wird eine Mehrzahl von Ausrichtungen betrachtet und aus diesen wird eine optimale Ausrichtung ermittelt, was wiederum implizit die Ermittlung der optimalen Reihenfolge für jede Kombination aus der Positionierung mit einer der Ausrichtungen beinhaltet. Hierarchisch betrachtet wird wiederum auf der unteren Ebene eine optimale Reihenfolge für eine Kombination aus Ausrichtung und Positionierung gefunden. Dann wird auf einer mittleren Ebene eine optimale Ausrichtung zu einer bestimmten Positionierung gefunden, wobei die auf der unteren Ebene ermittelte optimale Reihenfolge zugrunde gelegt wird. Auf einer oberen Ebene wird dann eine optimale Positionierung ermittelt, wobei die auf der mittleren sowie der unteren Ebene ermittelte optimale Ausrichtung und optimale Reihenfolge zugrunde gelegt werden. Bei der Suche nach einer optimalen Positionierung muss auch hier nicht der gesamte Bearbeitungsbereich in Betracht gezogen werden. Es reicht vielmehr aus, Positionen innerhalb eines Suchkreises in Betracht zu ziehen, dessen Durchmesser der Spurbreite entspricht. Beispielsweise reicht es bei einer Landmaschine mit einer Spurbreite von 8 m aus, Positionen innerhalb eines Kreises mit einem Durchmesser von 8 m zu untersuchen.

Gemäß einer Ausgestaltung basiert das Optimierungskriterium wenigstens teilweise auf einer Minimierung einer Fahrstrecke. "Wenigstens teilweise" bedeutet in diesem Zusammenhang, dass die Minimierung der Fahrstrecke nicht das einzige Ziel sein muss, sondern dass auch andere Werte minimiert oder maximiert werden sollen, so dass beispielsweise ein Kompromiss hergestellt wird, der sich von einer alleinigen Minimierung der Fahrstrecke unterscheiden kann. Insbesondere kann vorgesehen sein, die gesamte auf der Fahrroute zurückgelegte Fahrstrecke zu minimieren.

Alternativ kann auch vorgesehen sein, die insgesamt für Wendewege notwendige Fahrstrecke zu minimieren. Letztere kann als "unproduktive" Fahrstrecke angesehen werden. Es versteht sich, dass die beiden genannten Kriterien auf der unteren Optimierungsstufe, also beim Auffinden der optimalen Reihenfolge, gleichbedeutend sind, da die Fahrstrecke in den Fahrspuren hier stets gleich ist.

Alternativ oder zusätzlich kann das Optimierungskriterium wenigstens teilweise auf einer Minimierung einer Fahrzeit basieren. Hierbei kann zum einen die Fahrzeit für die gesamte Fahrroute zugrunde gelegt werden. Es kann aber auch die insgesamt für alle Spurwechsel und/oder Wendewege notwendige Fahrzeit betrachtet werden, welche wiederum eine "unproduktive" Fahrzeit darstellt. Im Gegensatz zur Fahrstrecke sind die beiden Kriterien auf der unteren Ebene nicht zwangsläufig gleichbedeutend. So könnte es zum Beispiel sein, dass der Bearbeitungsbereich ein Gefälle aufweist, das dazu führt, dass Fahrspuren in einer Richtung schneller durchfahren werden können als in Gegenrichtung. Die Anzahl und individuelle Länge der insgesamt "bergab" oder "bergauf" durchfahrenen Fahrspuren kann sich je nach Reihenfolge unterscheiden und somit auch die Fahrzeit, die insgesamt für die Fahrspuren benötigt wird.

Weiterhin alternativ oder zusätzlich kann das Optimierungskriterium wenigstens teilweise auf einer Minimierung eines Energieverbrauchs basieren. Hierbei wird normalerweise der voraussichtliche Energieverbrauch für die gesamte Fahrroute betrachtet. Dieser hängt von der gesamten Fahrstrecke ab, allerdings evtl. auch von anderen Parametern. So kann der Energieverbrauch auch von der Ausrichtung abhängen, wenn die Landmaschine zum Beispiel ein mehr oder weniger starke Steigung innerhalb der Fahrspuren bewältigen muss. Auch kann die Reihenfolge den Energieverbrauch beeinflussen, da sich die Anzahl und individuelle Länge der insgesamt "bergab" oder "bergauf" durchfahrenen Fahrspuren unterscheiden kann, wie bereits erwähnt wurde.

Unter Umständen kann das Optimierungskriterium in einer Minimierung oder Maximierung einer einzelnen Größe oder eines einzelnen Optimierungswertes bestehen, zum Beispiel einer Minimierung der gesamten Fahrstrecke. Je nach Beschaffenheit des Bearbeitungsbereichs, der Art des durchzuführenden Bearbeitungsvorgangs, den Leistungsdaten der Landmaschine und anderer Faktoren kann die Minimierung oder Maximierung eines Optimierungswertes bis zu einem gewissen Grad in Konkurrenz mit einer ebenfalls wünschenswerten Minimierung oder Maximierung eines anderen Optimierungswertes stehen. In diesem Fall stellt die isolierte Optimierung eines einzelnen Optimierungswertes oftmals keine zufriedenstellende Lösung dar. Eine Ausgestaltung sieht daher vor, dass das Optimierungskriterium auf der Optimierung einer gewichteten Kombination von Optimierungswerten basiert. Statt von einer gewichteten Kombination kann man normalerweise auch von einer Linearkombination sprechen, wenngleich es prinzipiell denkbar wäre, dass ein Optimierungswert nicht-linear, also zum Beispiel quadratisch, eingeht. Ein Optimierungswert könnte dabei beispielsweise die Fahrstrecke sein, während ein anderer Optimierungswert die Fahrzeit ist. Das Optimierungskriterium könnte dann in der Minimierung einer Summe liegen, wobei ein Summand proportional zur Fahrzeit und ein anderer Summand proportional zur Fahrstrecke ist. Durch Wahl geeigneter Gewichtungsfaktoren oder Normierungsfaktoren kann das relative Gewicht des jeweiligen Optimierungswertes angepasst werden. Die Summe kann auch als "Gesamt-Optimierungswert" $W_{gesamt}$ angesehen werden, welcher wie folgt definiert ist:

$$W_{gesamt} = \sum_k a_k W_k$$

wobei $W_k$ den k-ten Optimierungswert, zum Beispiel die Fahrstrecke, Fahrzeit etc. bezeichnet und $a_k$ der jeweilige Gewichtungsfaktor ist.

Alternativ kann das Optimierungskriterium auf einer Pareto-Optimierung mehrerer Optimierungswerte basieren. Das heißt, es wird - innerhalb eines untersuchten Parameterbereichs - ein Parametersatz gesucht, der die Optimierungswerte insoweit optimiert, als kein anderer Parametersatz einen der Optimierungswerte demgegenüber verbessert, ohne einen anderen zu verschlechtern. Zum Beispiel könnte ein Parametersatz aus Ausrichtung, Positionierung und Reihenfolge ein Pareto-Optimum hinsichtlich Fahrzeit und Fahrstrecke darstellen, wenn kein anderer Parametersatz eine kürzere Fahrzeit liefert, ohne eine längere Fahrstrecke zu liefern, und kein anderer Parametersatz eine kürzere Fahrstrecke liefert, ohne eine längere Fahrzeit zu liefern.

Es ist denkbar, dass die Landmaschine über ein Computersystem, beispielsweise eine Auswertungseinheit oder eine Recheneinheit, verfügt, das in der Lage ist, anhand ausreichender Informationen über den Bearbeitungsbereich die optimale Fahrroute zu ermitteln. In vielen Fällen ist es allerdings effizienter, wenn für wenigstens eine Landmaschine die optimale Fahrroute extern ermittelt wird und die Steuerdaten extern erzeugt und an die Landmaschine übermittelt werden. Insbesondere kann dies im Falle mehrerer Bearbeitungsschritte für alle Landmaschinen gelten. Die Ermittlung der optimalen Fahrroute und die Erzeugung der Steuerdaten erfolgen dann über ein zentrales System oder eine zentrale Auswerteeinheit, die sogar stationär in einem Gebäude untergebracht sein kann, das nicht einmal in der Nähe des Bearbeitungsbereichs sein muss. Durch drahtlose Kommunikation könnten die erzeugten Steuerdaten an die jeweilige Landmaschine übermittelt werden, die diese dann zum Abfahren der optimalen Fahrroute nutzt. Durch die zentrale, externe Verarbeitung sind auf Seiten der Landmaschine nur wenige Ressourcen im Hinblick auf Rechenkapazität und Speicherplatz notwendig. Es ist hierdurch außerdem leichter möglich, einzelne Landmaschinen und ihre zugehörigen Bearbeitungsschritte je nach Bedarf hinzuzufügen oder wegzulassen, als wenn für die Planung notwendige Ressourcen in einer der Landmaschinen lokalisiert sind.

Es können Steuerdaten für wenigstens eine autonom fahrende Landmaschine erzeugt werden, welche wenigstens einen Bearbeitungsschritt anhand der Steuerdaten autonom durchführt. Das heißt, soweit dieser Landmaschine die Steuerdaten zur Verfügung stehen, kann sie ohne menschliches Eingreifen die optimale Fahrroute abfahren und den zugehörigen Bearbeitungsschritt durchführen. Die Landmaschine kann zur Navigation unterschiedliche interne und/oder externe Sensoren nutzen. Unter Umständen kann sie sich wenigstens teilweise an einer Struktur des Bearbeitungsbereichs orientieren, zum Beispiel an einer Struktur eines Bestandes, welchen der Bearbeitungsbereich aufweist, insbesondere Bestandsgrenze, Reihen et cetera. Aber auch ohne einen vorhandenen Bestand können andere Strukturen genutzt werden, zum Beispiel Ackerfurchen. Es können, insbesondere in Abhängigkeit von der Beschaffenheit des Bearbeitungsbereichs, unterschiedliche Sensoren verwendet werden, zum Beispiel mechanische oder optische Sensoren, aktive oder passive Sensoren. Insbesondere kann die Landmaschine einen GNSS-Empfänger nutzen, um ihre aktuelle Ist-Position festzustellen und mit einer der optimalen Fahrroute entsprechenden Soll-Position zu vergleichen.

Alternativ oder, insbesondere im Fall mehrerer Bearbeitungsschritte, zusätzlich können Steuerdaten für wenigstens eine durch einen Fahrer gelenkte Landmaschine erzeugt werden, so dass anhand der Steuerdaten Steueranweisungen für den Fahrer erzeugt werden können. Dabei können die Steuerdaten innerhalb der Landmaschine zur Verfügung stehen und in Steueranweisungen umgesetzt werden. Alternativ wäre es auch denkbar, dass anhand der Steuerdaten extern Steueranweisungen erstellt und an die Landmaschine übermittelt werden. Es ist auch denkbar, dass ein und dieselbe Landmaschine zeitweise autonom gelenkt wird und zeitweise durch einen Fahrer. Die Steueranweisungen können visuell und/oder akustisch ausgegeben werden. Die Steueranweisungen könnten den Fahrer explizit darauf hinweisen, wie er die Landmaschine zu lenken hat, oder es könnte zum Beispiel auf einem Bildschirm eine Soll-Fahrlinie angezeigt werden, anhand derer sich der Fahrer orientieren kann.

Die Aufgabe wird weiterhin gelöst mit einem System zur Fahrroutenoptimierung bei einer Feldbearbeitung mit wenigstens einem Bearbeitungsschritt, bei welchem ein vorgegebener Bearbeitungsbereich von einer Landmaschine entsprechend einer Fahrroute mit einer Mehrzahl paralleler Fahrspuren durchfahren wird, wobei die Fahrroute charakterisierbar ist durch eine Ausrichtung der Fahrspuren, eine Positionierung, welche Positionen aller Fahrspuren festlegt, sowie eine Reihenfolge, in welcher die Fahrspuren durchfahren werden, wobei das System dazu eingerichtet ist

- für wenigstens einen Bearbeitungsschritt eine automatische Optimierung der Reihenfolge für jede einer Mehrzahl von Kombinationen aus jeweils einer Ausrichtung und einer Positionierung durchzuführen, indem aus einer Mehrzahl von Reihenfolgen eine entsprechend einem definierten Optimierungskriterium zur Fahrroutenoptimierung für diese Kombination optimale Reihenfolge ermittelt wird;
- für wenigstens einen Bearbeitungsschritt eine automatische Optimierung der Fahrroute durchzuführen, indem aus der Mehrzahl von Kombinationen, unter Einbeziehung der für die jeweilige Kombination ermittelten optimalen Reihenfolge, eine entsprechend dem Optimierungskriterium optimale Kombination ermittelt wird, die einer optimalen Fahrroute für diesen Bearbeitungsschritt entspricht; und
- automatisch Steuerdaten zur Steuerung wenigstens einer Landmaschine während eines Bearbeitungsschritts zu erzeugen, wobei die Steuerdaten die optimale Fahrroute repräsentieren.

Erfindungsgemäß enthält die Mehrzahl von Kombinationen unterschiedliche Kombinationen einer einzigen Ausrichtung mit unterschiedlichen Positionierungen.

Die genannten Begriffe wurden bereits oben mit Bezug auf das erfindungsgemäße Verfahren erläutert und werden daher nicht nochmals erklärt. Das Computersystem weist wenigstens einen Computer oder einen Rechner oder eine Datenverarbeitungseinheit auf. Es kann auch weitere Komponenten aufweisen, zum Beispiel drahtlose und/oder drahtgebundene Schnittstellen zur ein- oder beidseitigen Kommunikation mit anderen Vorrichtungen. Vorteilhafte Ausgestaltungen des erfindungsgemäßen Computersystems entsprechen denen des erfindungsgemäßen Verfahrens. Insbesondere kann es sich bei dem Computersystem um ein Farm-Management-Informationssystem handeln, welches außerhalb der wenigstens einen Landmaschine angeordnet ist, zum Beispiel stationär innerhalb eines Gebäudes. Das Computersystem könnte auch in einer mobilen Einheit, beispielsweise Laptop, Tablet, Smartphone etc..., angeordnet sein, welche Steueranweisungen für den Fahrer anzeigt oder Steuerdaten, insbesondere drahtlos, an die Landmaschine übermittelt. Allgemeiner gesprochen kann das Computersystem extern bezüglich der wenigstens eine Landmaschine ausgebildet und dazu eingerichtet sein, die Steuerdaten zur Übertragung an die wenigstens eine Landmaschine zu erzeugen. Es kann eine Schnittstelle zur Datenübertragung an die wenigstens eine Landmaschine aufweisen und dazu eingerichtet sein, die Steuerdaten, insbesondere drahtgebunden und/oder drahtlos. an die wenigstens eine Landmaschine zu übertragen.

Alternativ kann das Computersystem in eine Landmaschine integriert sein, das heißt, es kann ein Teil der Landmaschine sein und innerhalb dieser angeordnet sein. Dies ist insbesondere möglich, wenn lediglich ein Bearbeitungsschritt durchgeführt wird. Das Computersystem kann in jedem Fall teilweise softwaremäßig realisiert sein. Unabhängig davon, ob das Computersystem Teil der Landmaschine ist oder nicht, kann es eingerichtet sein, die Landmaschine entsprechend der Steuerdaten zu steuern.

Entsprechend der zweiten Alternative, wird durch die Erfindung auch eine Landmaschine mit einem Computersystem zur Fahrroutenoptimierung bei einer Feldbearbeitung mit wenigstens einem Bearbeitungsschritt zur Verfügung gestellt, bei welchem ein vorgegebener Bearbeitungsbereich von einer Landmaschine entsprechend einer Fahrroute mit einer Mehrzahl paralleler Fahrspuren durchfahren wird, wobei die Fahrroute charakterisierbar ist durch eine Ausrichtung der Fahrspuren, eine Positionierung, welche Positionen aller Fahrspuren festlegt, sowie eine Reihenfolge, in welcher die Fahrspuren durchfahren werden, wobei das Computersystem dazu eingerichtet ist

- für wenigstens einen Bearbeitungsschritt eine automatische Optimierung der Reihenfolge für jede einer Mehrzahl von Kombinationen aus jeweils einer Ausrichtung und einer Positionierung durchzuführen, indem aus einer Mehrzahl von Reihenfolgen eine entsprechend einem definierten Optimierungskriterium zur Fahrroutenoptimierung für diese Kombination optimale Reihenfolge ermittelt wird;
- für wenigstens einen Bearbeitungsschritt eine automatische Optimierung der Fahrroute durchzuführen, indem aus der Mehrzahl von Kombinationen, unter Einbeziehung der für die jeweilige Kombination ermittelten optimalen Reihenfolge, eine entsprechend dem Optimierungskriterium optimale Kombination ermittelt wird, die einer optimalen Fahrroute für diesen Bearbeitungsschritt entspricht; und
- automatisch Steuerdaten zur Steuerung wenigstens einer Landmaschine während eines Bearbeitungsschritts zu erzeugen, wobei die Steuerdaten die optimale Fahrroute repräsentieren.

Erfindungsgemäß enthält die Mehrzahl von Kombinationen unterschiedliche Kombinationen einer einzigen Ausrichtung mit unterschiedlichen Positionierungen.

Wiederum entsprechen bevorzugte Ausführungsformen der erfindungsgemäßen Landmaschine denen des erfindungsgemäßen Verfahrens.

Durch die Erfindung wird weiterhin ein Computerprogrammprodukt zur Verfügung gestellt, mit Programmcodemitteln, welche ein Computersystem befähigen, das erfindungsgemäße Verfahren auszuführen. Das Computerprogrammprodukt beinhaltet also eine Software, die auf der Hardware des Computersystems das erfindungsgemäße Verfahren implementiert. Es kann in Form eines Datenträgers vorliegen, auf dem die Software und/oder die Programmcodemittel, insbesondere flüchtig und/oder nicht-flüchtig, gespeichert sind. Der Datenträger kann dabei auch dauerhaft in das Computersystem integriert oder integrierbar sein.

Im Folgenden wird die Erfindung anhand von Figuren beschrieben. Die Figuren sind lediglich beispielhaft und schränken den allgemeinen Erfindungsgedanken nicht ein. Es zeigen

Fig. 1    eine Draufsicht eines Teils eines Flurstücks mit einer Landmaschine sowie eines erfindungsgemäßen Computersystems zur Fahrroutenoptimierung;

Fig. 2    eine Draufsicht des Feldes aus Fig.1 mit einer ersten Fahrroute;

Fig. 3    eine Draufsicht des Feldes aus Fig.1 mit einer zweiten Fahrroute;

Fig. 4    eine Draufsicht des Feldes aus Fig.1 mit einer dritten Fahrroute;

Fig. 5    eine Draufsicht des Feldes aus Fig.1 mit einer vierten Fahrroute;

Fig. 6    eine Draufsicht des Feldes aus Fig.1 mit einer fünften Fahrroute;

Fig. 7    ein Flussdiagramm eines ersten erfindungsgemäßen Verfahrens zur Fahrroutenoptimierung; sowie

Fig. 8    ein Flussdiagramm eines zweiten erfindungsgemäßen Verfahrens zur Fahrroutenoptimierung.

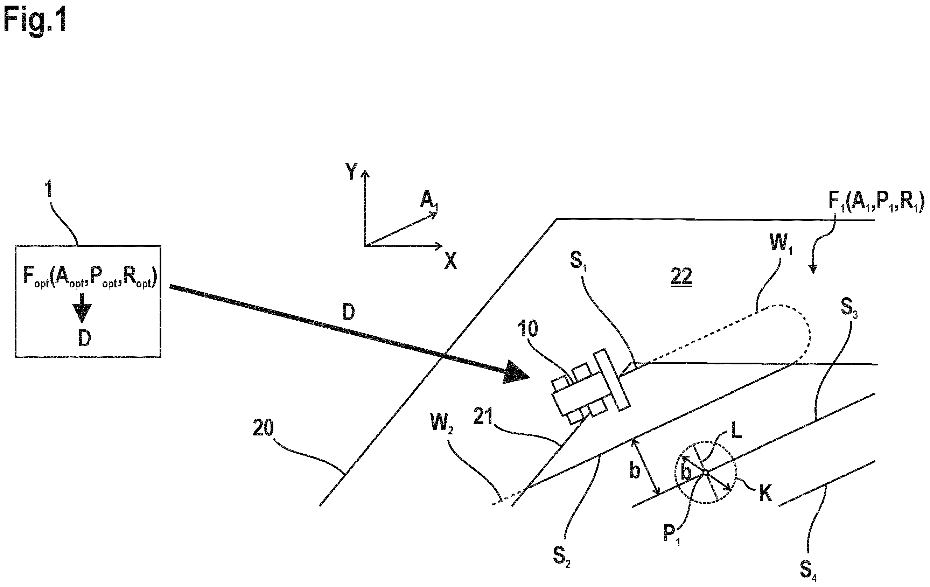

Fig. 1 zeigt eine Draufsicht eines Teils eines Flurstücks 20 sowie eine Landmaschine 10, zum Beispiel einen Feldhäcksler. Stark schematisiert ist ein erfindungsgemäßes Computersystem 1 zur Fahrroutenoptimierung dargestellt, das in diesem Fall außerhalb der Landmaschine 10 angeordnet ist, beispielsweise in einem Gebäude, das weit von dem Flurstück 20 entfernt sein kann. Das Computersystem 1 kann durch ein Farm-Management-Informationssystem gebildet sein oder einen Teil desselben darstellen. Es weist eine hier nicht einzeln dargestellte Schnittstelle zur drahtlosen Datenübertragung an die Landmaschine 10 auf. Es ist vorgesehen, dass die Landmaschine 10 in einem Bearbeitungsbereich 21 des Flurstücks 20 einen Bearbeitungsschritt durchführt, beispielsweise das Ernten und Häckseln von Mais, wobei die Landmaschine 10 eine Mehrzahl von parallelen Fahrspuren abfährt. Der Bearbeitungsbereich 21 ist von einem umlaufenden Vorgewende 22 umgeben, das dazu dient, der Landmaschine 10 Wendemanöver zwischen den einzelnen Fahrspuren $S_1$-$S_5$ zu ermöglichen. Insgesamt kann eine Mehrzahl von aufeinanderfolgenden Bearbeitungsschritten vorgesehen sein, die in der Regel von unterschiedlichen Landmaschinen 10 durchgeführt werden.

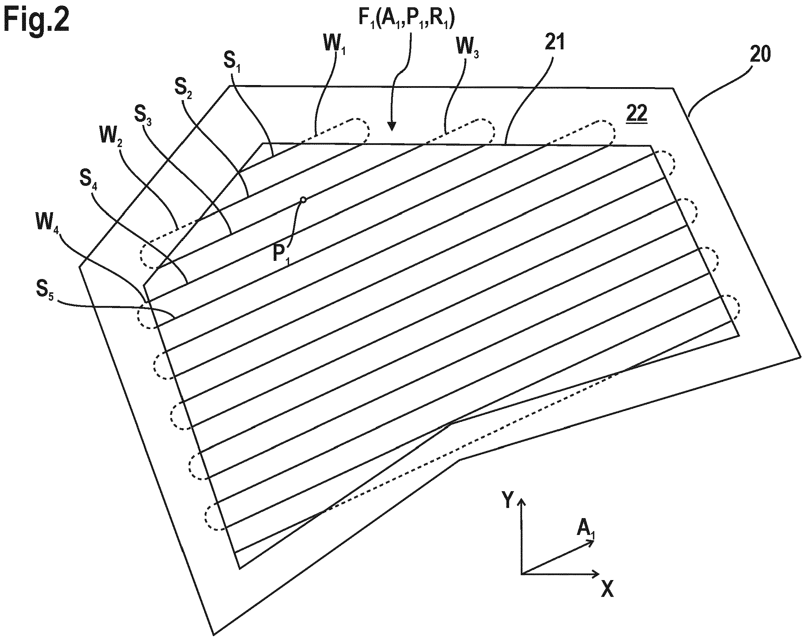

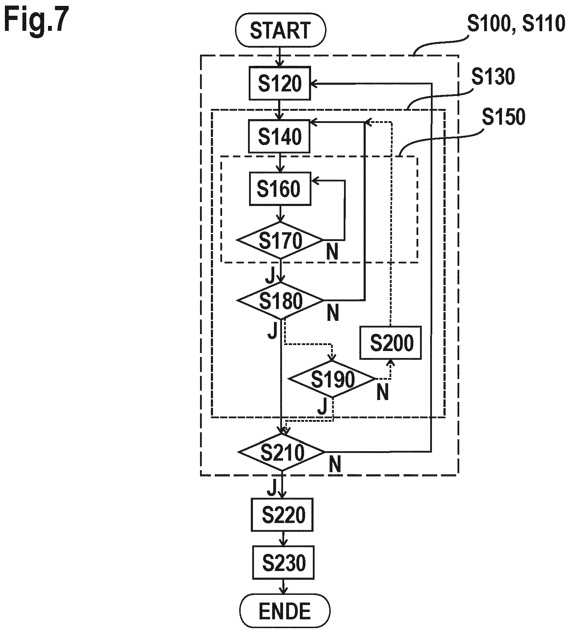

Vor der Feldbearbeitung führt das Computersystem 1 ein erfindungsgemäßes Verfahren zur Fahrroutenoptimierung durch, welches anhand des Flussdiagramms in Fig. 7 sowie anhand der Draufsicht des Flurstücks 20 in Fig. 2 bis 6 erläutert wird. Das Computersystem 1 verfügt über verschiedene Daten betreffend das Flurstück 20, insbesondere die geometrischen Abmessungen des Bearbeitungsbereichs 21 sowie ggf. die des Vorgewendes 22. Optional können weitere Daten wie beispielsweise die lokale Bodenbeschaffenheit oder ein eventuell vorhandenes Gefälle einbezogen werden. Des Weiteren verfügt das Computersystem 1 über Daten betreffend die Landmaschine 10, insbesondere eine effektive Arbeitsbreite derselben sowie ihren minimalen Wenderadius. Weiterhin können die Leistungsdaten der Landmaschine 10 in Abhängigkeit von Bodenbeschaffenheit, Gefälle oder anderen Faktoren bekannt sein, zum Beispiel eine hiervon abhängige Geschwindigkeit, ein Treibstoffverbrauch oder dergleichen.

Die Fahrroutenoptimierung dient der Auffindung einer optimalen Fahrroute $F_{opt}$ für die Landmaschine 10, welche durch eine optimale Ausrichtung $A_{opt}$, eine optimale Positionierung $P_{opt}$ sowie eine optimale Reihenfolge $R_{opt}$ ausgedrückt werden kann. Hierfür wird ein Optimierungskriterium definiert und eine Optimierung wird auf Basis des Optimierungskriteriums durchgeführt. Dieses kann beispielsweise die Minimierung einer gesamten Fahrstrecke sein, die Minimierung einer Fahrstrecke für die Wendemanöver, die Minimierung einer gesamten Fahrzeit, die Minimierung eines Treibstoffverbrauchs oder dergleichen. Es ist auch möglich, dass mehrere Teilkriterien definiert werden, zwischen denen eine gewisse Konkurrenz bestehen kann. Zum einen kann die Minimierung einer gewichteten Kombination verschiedener Optimierungswerte, beispielsweise eine Fahrstrecke, eine Fahrzeit, etc..., angestrebt werden, zum anderen kann auch eine Pareto-Optimierung hinsichtlich verschiedener Optimierungswerte durchgeführt werden.

Jede Fahrroute kann anhand einer Ausrichtung $A_1$, $A_2$, einer Positionierung $P_1$-$P_4$ sowie einer Reihenfolge $R_1$-$R_5$ charakterisiert werden. Die Ausrichtung $A_1$, $A_2$ bezieht sich darauf, wie die Fahrspuren $S_1$-$S_5$ gegenüber einem Bezugssystem ausgerichtet sind, wobei in den Figuren ein zweidimensionales Koordinatensystem mit einer X-Achse sowie einer Y-Achse eingezeichnet ist, wobei die X-Achse beispielsweise nach Osten zeigen kann, während die Y-Achse nach Norden zeigt. Bei den hier gezeigten geraden, parallelen Fahrspuren $S_1$-$S_5$ kann die Ausrichtung $A_1$, $A_2$ in einem solchen Bezugssystem durch eine einzige Winkelangabe wiedergegeben werden. Die Positionierung $P_1$-$P_4$ bezeichnet die Positionen der Fahrspuren $S_1$-$S_5$, wobei es in Kenntnis einer Spurbreite b, die der oben erwähnten effektiven Arbeitsbreite der Landmaschine 10 entspricht, ausreicht, einen zweidimensionalen Koordinatenpunkt auf einer der Fahrspuren $S_1$-$S_5$ anzugeben, wie in Fig. 1 bis 6 dargestellt. Um den gesamten Bearbeitungsbereich 21 abzudecken, können je nach Ausrichtung $A_1$, $A_2$ unterschiedlich viele Fahrspuren $S_1$-$S_5$ nötig sein, im Beispiel gemäß Fig. 2 sind es vierzehn Fahrspuren $S_1$-$S_5$, die entsprechend einer ersten Ausrichtung $A_1$ und einer ersten Positionierung $P_1$ angeordnet sind. Diese Fahrspuren $S_1$-$S_5$ werden in einer ersten Reihenfolge $R_1$ abgefahren, welche unterschiedlich gewählt werden kann.

Die Optimierung wird in verschachtelter Form durchgeführt, wobei je nach Betrachtungsweise eine Optimierung auf zwei oder drei unterschiedlichen Ebenen erfolgt. Man kann davon sprechen, dass auf einer oberen Ebene, bei S100 im Flussdiagramm von Fig. 7, eine optimale Kombination einer Ausrichtung $A_1$, $A_2$ und einer Positionierung $P_1$-$P_4$ ermittelt wird, während auf einer unteren Ebene bei S150 eine optimale Reihenfolge $R_{opt}$ ermittelt wird. Präziser kann man davon sprechen, dass bei mehr als zwei Ebenen auf der oberen Ebene bei S110 eine optimale Ausrichtung $A_{opt}$ ermittelt wird, auf einer mittleren Ebene bei S130 eine optimale Positionierung $P_{opt}$ ermittelt wird und auf der unteren Ebene bei S150 eine optimale Reihenfolge $R_{opt}$ ermittelt wird, wobei die Optimierungen auf den drei Ebenen ineinander verschachtelt sind, wie grafisch in Fig. 7 gut erkennbar ist.

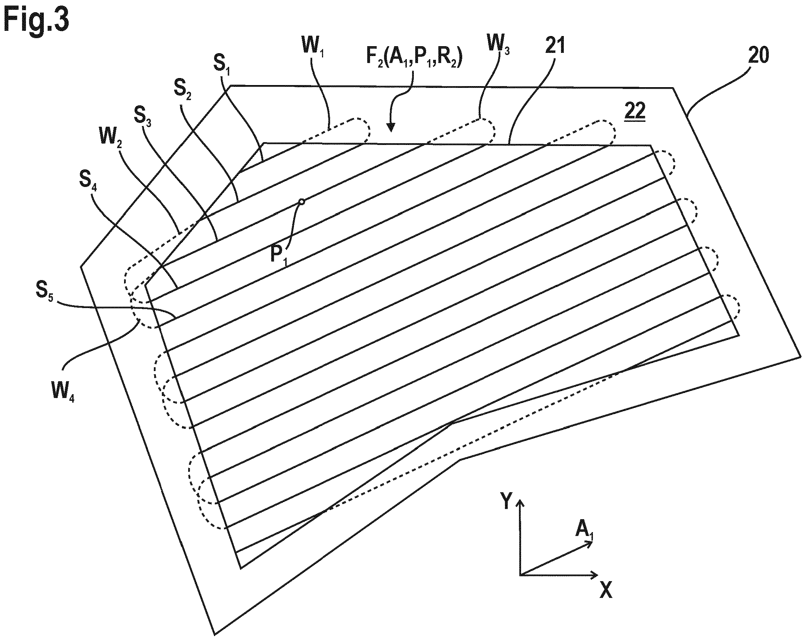

Auf der oberen Ebene wird bei S120 eine Ausrichtung $A_1$, $A_2$ ausgewählt. Für diese wird nun in Schritt S140 eine erste Positionierung $P_1$ ausgewählt, was einen ersten Schritt zur Ermittlung der optimalen Positionierung $P_{opt}$ bildet. In Schritt S160 wird wiederum für die genannte Ausrichtung $A_1$, $A_2$ und die Positionierung $P_1$-$P_4$ eine Reihenfolge $R_1$-$R_5$ ausgewählt. In Schritt S170 wird überprüft, ob bereits eine optimale Reihenfolge $R_{opt}$ gefunden wurde, was in der Regel für die erste Reihenfolge $R_1$ zu verneinen ist, so dass das Verfahren zu Schritt S160 zurückkehrt, wo eine in Fig. 3 dargestellte zweite Reihenfolge $R_2$ ausgewählt wird. Für jede Reihen-

folge $R_1$-$R_5$ wird geprüft, ob diese in Kombination mit der jeweils gewählten Ausrichtung $A_1$, $A_2$ und Positionierung $P_1$-$P_4$ optimal hinsichtlich des Optimierungskriteriums ist, beispielsweise einen Optimierungswert wie die Gesamtfahrzeit, die Gesamtfahrstrecke oder dergleichen minimiert. Zur Berechnung des Optimierungswerts, der auch als Kostenwert bezeichnet werden kann, werden jeweils Beiträge einzelner Routenabschnitte der Fahrroute aufsummiert, was sowohl die Routenabschnitte von Fahrspuren $S_1$-$S_5$ als auch die Routenabschnitte von Wendewegen $W_1$-$W_4$ einschließt. Dabei ist vorgesehen, dass die Beiträge der Wendewege $W_1$-$W_4$ insofern realistisch berücksichtigt werden, als sie zumindest von den Relativpositionen der durch den Wendeweg $W_1$-$W_4$ verbundenen Fahrspuren $S_1$-$S_5$ abhängen, bevorzugt jedoch explizit von den verbundenen Fahrspuren $S_1$-$S_5$ abhängen. Letzteres ist insofern sinnvoll, als beispielsweise in Fig. 2 der zweite Wendeweg $W_2$ von der zweiten Fahrspur $S_2$ zur dritten Fahrspur $S_3$ objektiv eine längere Wegstrecke aufweist und eine längere Fahrzeit benötigt als beispielsweise der vierte Wendeweg $W_4$ von der vierten Fahrspur $S_4$ zur fünften Fahrspur $S_5$. Im Falle mehrerer Bearbeitungsschritte kann der Optimierungswert durch Aufsummieren von Beiträgen der Fahrrouten aller Bearbeitungsschritte ermittelt werden. Zur Auffindung der optimalen Reihenfolge $R_{opt}$ könnten sämtliche denkbaren Reihenfolgen $R_1$-$R_5$ getestet werden, was zwar eine sichere, allerdings hinsichtlich Zeit- und Rechenaufwand ineffiziente Vorgehensweise wäre. Statt dessen können verschiedene numerische Verfahren, insbesondere metaheuristische Verfahren verwendet werden.

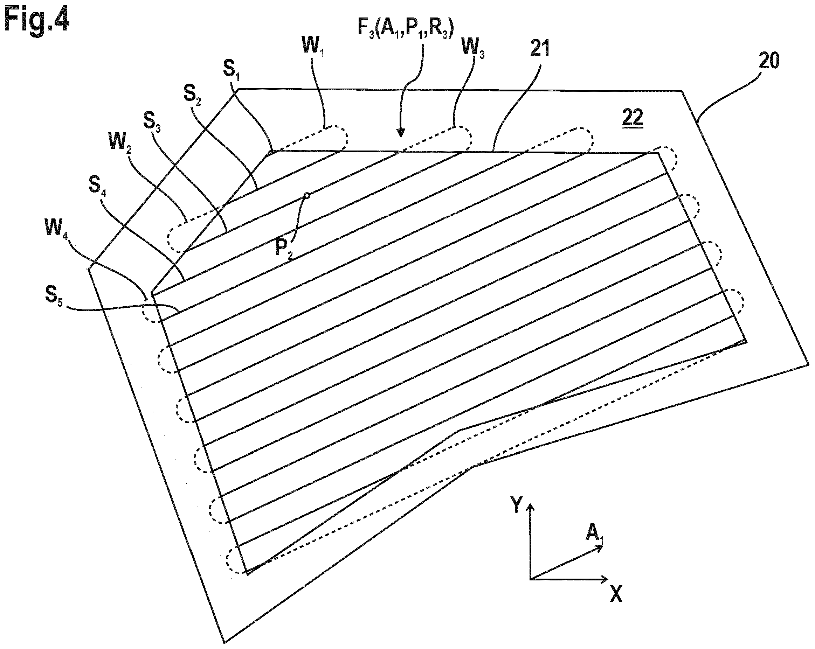

Wenn in Schritt S170 entschieden wird, dass die optimale Reihenfolge $R_{opt}$ gefunden wurde, ist die Optimierung auf der unteren Ebene beendet und es wird in Schritt S180 überprüft, ob bereits die optimale Positionierung $P_{opt}$ zu der jeweiligen Ausrichtung $A_1$, $A_2$ gefunden wurde. Sofern dies nicht der Fall ist, kehrt das Verfahren zu Schritt S140 zurück, wo eine neue Positionierung P ausgewählt wird, beispielsweise die in Fig. 4 dargestellte zweite Positionierung $P_2$, bei welcher sich die Gesamtzahl der Fahrspuren $S_1$-$S_5$ auf fünfzehn erhöht. Dabei muss für jede Positionierung $P_1$-$P_4$ die Optimierung auf der unteren Ebene durchgeführt werden, das heißt, es muss jeweils eine optimale Reihenfolge $R_{opt}$ ermittelt werden. Da eine Verschiebung der Positionierung $P_1$-$P_4$ in Richtung der Ausrichtung $A_1$, $A_2$ die tatsächliche Lage der Fahrspuren nicht verändert, ebensowenig wie eine Verschiebung quer zur Ausrichtung $A_1$, $A_2$ um ein ganzzahliges Vielfaches einer Spurbreite B, kann die Suche nach der optimalen Positionierung $P_{opt}$ auf eine in Fig. 1 dargestellte Suchlinie L beschränkt werden, die quer zur ersten Ausrichtung $A_1$ verläuft und deren Länge der Spurbreite b entspricht.

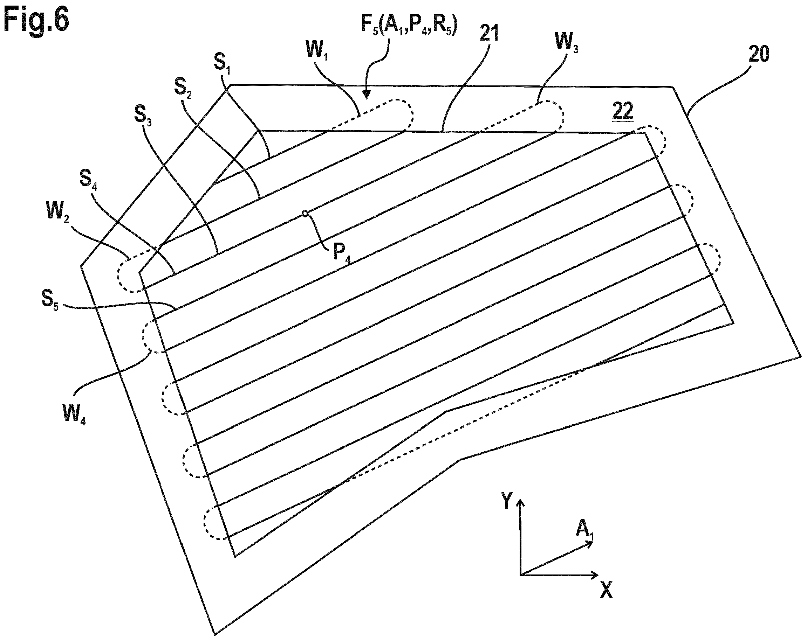

Wird in Schritt S180 entschieden, dass die optimale Positionierung $P_{opt}$ gefunden wurde, ist die Optimierung auf der mittleren Ebene beendet, womit zu einer bestimmten Ausrichtung $A_1$, $A_2$ die optimale Positionierung $P_{opt}$ und optimale Reihenfolge $R_{opt}$ gefunden worden. Falls mehrere Bearbeitungsschritte betrachtet werden, wird in Schritt S190 geprüft, ob bereits die optimale Positionierung $P_{opt}$ für den letzten Bearbeitungsschritt gefunden wurde. Falls nein, wird in Schritt S200 der nächste Bearbeitungsschritt für die Optimierung der Positionierung $P_1$-$P_4$ ausgewählt und das Verfahren kehrt zu S140 zurück. Für unterschiedliche Bearbeitungsschritte ergeben sich allgemein unterschiedliche optimale Positionierungen $P_{opt}$ und Reihenfolgen $R_{opt}$. Fig.6 zeigt für die erste Ausrichtung $A_1$ ein Beispiel einer vierten Positionierung $P_4$ für einen anderen Bearbeitungsschritt, der mit einer anderen Landmaschine erfolgt, die eine andere Spurbreite aufweist. Das Ergebnis der Optimierung der Positionierung $P_1$-$P_4$ in den weiteren Bearbeitungsschritten kann unter Umständen von der optimalen Positionierung $P_{opt}$ für den ersten Bearbeitungsschritt abhängen, beispielsweise dann, wenn eine verdichtete Bodenfläche minimiert werden soll, was qualitativ dadurch möglich ist, dass eine nachfolgende Landmaschine mit ihren Rädern in den Spuren der vorhergehenden Landmaschine fährt.

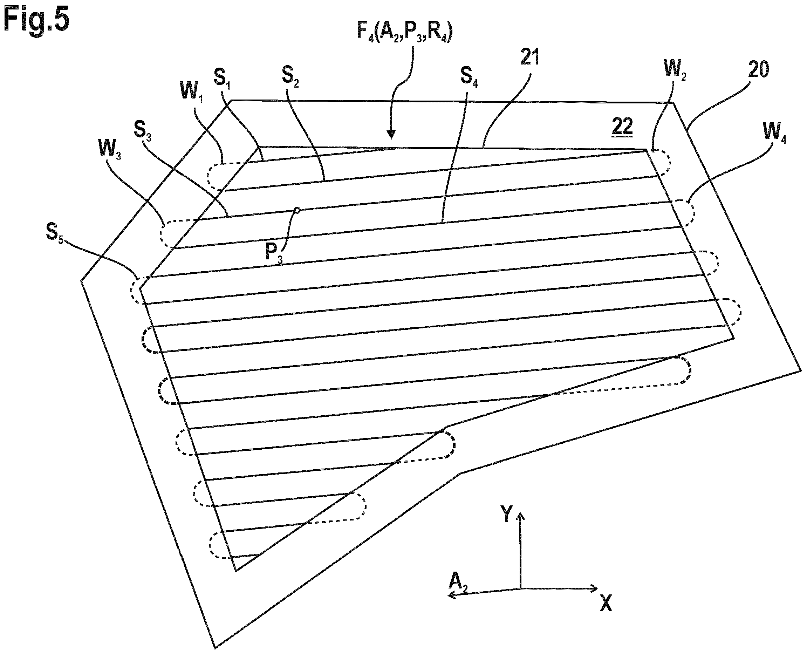

Wenn in Schritt S190 festgestellt wird, dass alle Bearbeitungsschritte betrachtet wurden, oder im Falle eines einzigen Bearbeitungsschritts, fährt das Verfahren mit Schritt S210 fort. Nach dem Auffinden der optimalen Positionierung $P_{opt}$, oder Positionierungen für unterschiedlichen Bearbeitungsschritte, wird auf der oberen Ebene dann diejenige Ausrichtung A ermittelt, die in Kombination mit der ihr zugeordneten optimalen Positionierung $P_{opt}$ und optimalen Reihenfolge $R_{opt}$ eine optimale Fahrroute $F_{opt}$ repräsentiert. In Schritt S220 wird geprüft, ob bereits die optimale Ausrichtung $A_{opt}$ gefunden wurde. Falls nein, kehrt das Verfahren zu Schritt S120 zurück, wo eine neue, in Fig. 5 dargestellte Ausrichtung A geprüft wird, für die wiederum die zugehörige optimale Positionierung $P_{opt}$ und optimale Reihenfolge $R_{opt}$ ermittelt werden müssen.

Wird in Schritt S210 festgestellt, dass die optimale Ausrichtung $A_{opt}$ gefunden wurde, stehen nun optimale Parameter für die Ausrichtung $A_1$, $A_2$, die Positionierung $P_1$-$P_4$ und die Reihenfolge $R_1$-$R_5$ fest, welche einer optimalen Fahrroute $F_{opt}$ entsprechen. Das Computersystem 1 erzeugt nun in Schritt S220 Steuerdaten D für die Landmaschine 10, die der optimalen Fahrroute $F_{opt}$ entsprechen, insbesondere der optimalen Ausrichtung $A_{opt}$, optimalen Positionierung $P_{opt}$ und optimalen Reihenfolge $R_{opt}$. Sofern die Landmaschine 10 durch einen Fahrer gesteuert wird, können die Steuerdaten D Anweisungen für den Fahrer entsprechen, anhand derer er die Landmaschine 10 entlang der Fahrroute steuern kann. Falls die Landmaschine 10 autonom fährt, können die Steuerdaten D explizite Fahrkommandos und/oder Lenkkommandos für die Systeme der Landmaschine 10 beinhalten. In Schritt S230 werden die Steuerdaten D drahtlos an die Landmaschine 10 gesendet, wie in Fig. 1 angedeutet.

Um das Computersystem 1 in die Lage zu versetzen, das dargestellte Verfahren durchzuführen, kann die nötige Software als Computerprogrammprodukt, zum Beispiel als mobiler oder integrierter Datenträger zur Verfügung gestellt werden, welcher Programmcodemittel und/oder einen Programmcode aufweist, der das Verfahren auf der Hardware des Computersystems implementiert.

Gemäß einer nicht dargestellten Alternative kann das Computersystem 1 auch in die Landmaschine 10 integriert sein. In diesem Fall stehen die Steuerdaten D unmittelbar in der Ladmaschine 10 zur Verfügung.

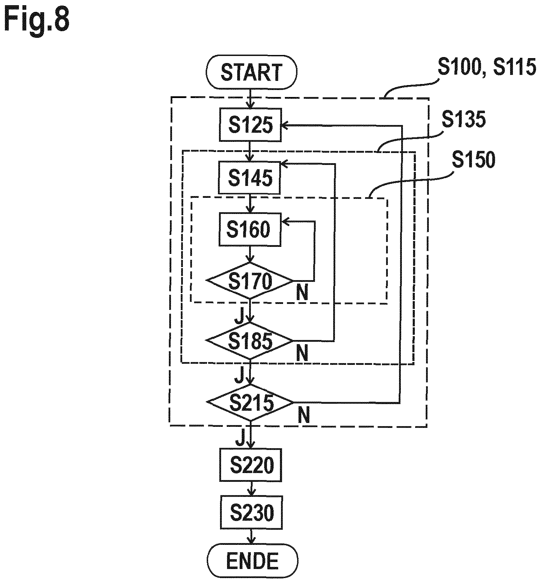

Fig. 8 zeigt eine zweite Ausführungsform eines Verfahrens zur Fahrroutenoptimierung, die in einigen Aspekten mit der Ausführungsform übereinstimmt und insofern nicht nochmals erläutert wird. Allerdings wird hier auf der oberen Optimierungsebene in einem Block S115 eine optimale Positionierung $P_{opt}$ bestimmt, während auf der mittleren Optimierungsebene bei S135 eine optimale Ausrichtung $A_{opt}$ zur jeweiligen Positionierung P bestimmt wird. Unabhängig davon, welche Ausrichtung A gewählt wird, führen Verschiebungen der Positionierung P um ein ganzzahliges Vielfaches der Spurbreite b zu einer identischen Anordnung der Fahrspuren F, weshalb die Suche nach einer optimalen Positionierung $P_{opt}$ auf die Fläche eines Suchkreises K beschränkt werden kann, dessen Durchmesser der Spurbreite b entspricht, wie in Fig. 1 dargestellt. In Schritt S125 wird eine Positionierung ausgewählt und in Schritt S215 wird geprüft, ob die optimale Positionierung $P_{opt}$ gefunden wurde. In Schritt S145 wird eine Ausrichtung ausgewählt und in Schritt S185 wird geprüft, ob die optimale Ausrichtung $A_{opt}$ zur jeweiligen Positionierung gefunden wurde. Dabei werden unter anderem unterschiedliche Positionierungen mit einer einzigen Ausrichtung kombiniert, um diesbezüglich verschiedene Kombinationen zu testen. Die Schritte S160 und S170 unterscheiden sich nicht von der ersten Ausführungsform, ebensowenig die Schritte S220 und S230. Die hier gezeigte Ausführungsform erlaubt nur eine Optimierung hinsichtlich eines einzelnen Bearbeitungsschritts, so dass die Schritte S190 und S200 hier ersatzlos entfallen. Der Grund liegt darin, dass die Ausrichtung nicht auf der oberen Ebene gewählt und optimiert wird, sondern auf der mittleren Ebene. Ebendiese Ausrichtung muss von den weiteren Bearbeitungsschritten, soweit vorhanden, übernommen werden, was im Allgemeinen zu einer suboptimalen Lösung für die Gesamtheit aller Bearbeitungsschritte führt.

## Patentansprüche

1. Verfahren zur Fahrroutenoptimierung bei einer Feldbearbeitung mit wenigstens einem Bearbeitungsschritt, bei welchem ein vorgegebener Bearbeitungsbereich (21) von einer Landmaschine (10) entsprechend einer Fahrroute ($F_1$-$F_5$) mit einer Mehrzahl paralleler Fahrspuren ($S_1$-$S_5$) durchfahren wird, wobei die Fahrroute ($F_1$-$F_5$) charakterisierbar ist durch eine Ausrichtung ($A_1$, $A_2$) der Fahrspuren ($S_1$-$S_5$), eine Positionierung ($P_1$-$P_4$), welche Positionen aller Fahrspuren ($S_1$-$S_5$) festlegt, sowie eine Reihenfolge ($R_1$-$R_5$), in welcher die Fahrspuren ($S_1$-$S_5$) durchfahren werden, wobei

   - für wenigstens einen Bearbeitungsschritt eine automatische Optimierung der Reihenfolge ($R_1$-$R_5$) für jede einer Mehrzahl von Kombinationen aus jeweils einer Ausrichtung ($A_1$, $A_2$) und einer Positionierung ($P_1$-$P_4$) durchgeführt wird (S150), indem aus einer Mehrzahl von Reihenfolgen ($R_1$-$R_5$) eine entsprechend einem definierten Optimierungskriterium zur Fahrroutenoptimierung für diese Kombination optimale Reihenfolge ($R_{opt}$) ermittelt wird;
   - für wenigstens einen Bearbeitungsschritt eine automatische Optimierung der Fahrroute ($F_1$-$F_5$) durchgeführt wird, indem aus der Mehrzahl von Kombinationen, unter Einbeziehung der für die jeweilige Kombination ermittelten optimalen Reihenfolge ($R_{opt}$), eine entsprechend dem Optimierungskriterium optimale Kombination ermittelt wird (S100), die einer optimalen Fahrroute ($F_{opt}$) für diesen Bearbeitungsschritt entspricht; und
   - automatisch Steuerdaten (D) zur Steuerung wenigstens einer Landmaschine (10) während eines Bearbeitungsschritts erzeugt werden (S230), wobei die Steuerdaten die optimale Fahrroute ($F_{opt}$) repräsentieren,

   **dadurch gekennzeichnet, dass**
   die Mehrzahl von Kombinationen unterschiedliche Kombinationen einer einzigen Ausrichtung ($A_1$, $A_2$) mit unterschiedlichen Positionierungen ($P_1$-$P_4$) enthält.

2. Verfahren nach Anspruch 1, **dadurch gekennzeichnet, dass** das Optimierungskriterium wenigstens teilweise auf einer Optimierung eines Optimierungswerts basiert, der durch Aufsummieren von Beiträgen einzelner Routenabschnitte der Fahrroute ($F_1$-$F_5$) ermittelt wird.

3. Verfahren nach einem der vorherigen Ansprüche, **dadurch gekennzeichnet, dass** das Optimierungskriterium bei jeder Optimierung sowohl Routenabschnitte der Fahrspuren ($S_1$-$S_5$) als auch Routenabschnitte von, die Fahrspuren ($S_1$-$S_5$) verbindenden, Wendewegen ($W_1$-$W_4$) berücksichtigt, wobei die Routenabschnitte der Wendewege ($W_1$-$W_4$) in Abhängigkeit von der jeweiligen Reihenfolge ($R_1$-$R_5$) berücksichtigt werden.

4. Verfahren nach einem der vorherigen Ansprüche, **dadurch gekennzeichnet, dass** das Optimierungskriterium bei jeder Optimierung einen Routenab-

schnitt eines zwei Fahrspuren ($S_1$-$S_5$) verbindenden Wendewegs ($W_1$-$W_4$) wenigstens in Abhängigkeit von einer Relativposition dieser Fahrspuren ($S_1$-$S_5$) berücksichtigt.

5. Verfahren nach einem der vorherigen Ansprüche, **dadurch gekennzeichnet, dass** zur Optimierung der Fahrroute ($F_1$-$F_5$) für jede einer Mehrzahl von Ausrichtungen ($A_1$, $A_2$) eine optimale Positionierung ($P_{opt}$) aus einer Mehrzahl von Positionierungen ($P_1$-$P_4$) ermittelt wird (S130), und die optimale Kombination aus einer Mehrzahl von Kombinationen aus jeweils einer Ausrichtung ($A_1$, $A_2$) und der hierzu ermittelten optimalen Positionierung ($P_{opt}$) ermittelt wird.

6. Verfahren nach einem der vorherigen Ansprüche, **dadurch gekennzeichnet, dass** das Optimierungskriterium jeden einer Mehrzahl von Bearbeitungsschritten berücksichtigt, so dass die Optimierung der Fahrroute ($F_1$-$F_5$) für den jeweiligen Bearbeitungsschritt in Abhängigkeit von sämtlichen Bearbeitungsschritten erfolgt, wobei die Ausrichtung ($A_1$, $A_2$) für alle Bearbeitungsschritte gleich ist.

7. Verfahren nach einem der vorherigen Ansprüche, **dadurch gekennzeichnet, dass** zur Optimierung der Fahrroute ($F_1$-$F_5$) für jede einer Mehrzahl von Positionierungen ($P_1$-$P_4$) eine optimale Ausrichtung ($A_{opt}$) aus einer Mehrzahl von Ausrichtungen ($A_1$, $A_2$) ermittelt wird (S135), und die optimale Kombination aus einer Mehrzahl von Kombinationen aus jeweils einer Positionierung ($P_1$-$P_4$) und der hierzu ermittelten optimalen Ausrichtung ($A_{opt}$) ermittelt wird.

8. Verfahren nach einem der vorherigen Ansprüche, **dadurch gekennzeichnet, dass** das Optimierungskriterium wenigstens teilweise auf einer Minimierung einer Fahrstrecke, einer Minimierung einer Fahrzeit und/oder einer Minimierung eines Energieverbrauchs basiert.

9. Verfahren nach einem der vorherigen Ansprüche, **dadurch gekennzeichnet, dass** das Optimierungskriterium auf der Optimierung einer gewichteten Kombination mehrerer Optimierungswerte basiert.

10. Verfahren nach einem der vorherigen Ansprüche, **dadurch gekennzeichnet, dass** das Optimierungskriterium auf einer Pareto-Optimierung mehrerer Optimierungswerte basiert.

11. Verfahren nach einem der vorherigen Ansprüche, **dadurch gekennzeichnet, dass** für wenigstens eine Landmaschine (10) die optimale Fahrroute ($F_{opt}$) extern ermittelt wird und die Steuerdaten (D) extern erzeugt und an die Landmaschine übermittelt werden (S240).

12. Verfahren nach einem der vorherigen Ansprüche, **dadurch gekennzeichnet, dass** Steuerdaten (D) für wenigstens eine autonom fahrende Landmaschine (10) erzeugt werden, welche wenigstens einen Bearbeitungsschritt anhand der Steuerdaten (D) autonom durchführt.

13. Verfahren nach einem der vorherigen Ansprüche, **dadurch gekennzeichnet, dass** Steuerdaten (D) für wenigstens eine durch einen Fahrer gelenkte Landmaschine (10) erzeugt werden, so dass anhand der Steuerdaten (D) Steueranweisungen für den Fahrer erzeugt werden können.

14. Computersystem (1) zur Fahrroutenoptimierung bei einer Feldbearbeitung mit wenigstens einem Bearbeitungsschritt, bei welchem ein vorgegebener Bearbeitungsbereich (21) von einer Landmaschine (10) entsprechend einer Fahrroute ($F_1$-$F_5$) mit einer Mehrzahl paralleler Fahrspuren ($S_1$-$S_5$) durchfahren wird, wobei die Fahrroute ($F_1$-$F_5$) charakterisierbar ist durch eine Ausrichtung ($A_1$, $A_2$) der Fahrspuren ($S_1$-$S_5$), eine Positionierung ($P_1$-$P_4$), welche Positionen aller Fahrspuren ($S_1$-$S_5$) festlegt, sowie eine Reihenfolge ($R_1$-$R_5$), in welcher die Fahrspuren ($S_1$-$S_5$) durchfahren werden, wobei das Computersystem (1) dazu eingerichtet ist

- für wenigstens einen Bearbeitungsschritt eine automatische Optimierung der Reihenfolge ($R_1$-$R_5$) für jede einer Mehrzahl von Kombinationen aus jeweils einer Ausrichtung ($A_1$, $A_2$) und einer Positionierung ($P_1$-$P_4$) durchzuführen (S150), indem aus einer Mehrzahl von Reihenfolgen ($R_1$-$R_5$) eine entsprechend einem definierten Optimierungskriterium zur Fahrroutenoptimierung für diese Kombination optimale Reihenfolge ($R_{opt}$) ermittelt wird;
- für wenigstens einen Bearbeitungsschritt eine automatische Optimierung der Fahrroute ($F_1$-$F_5$) durchzuführen, indem aus der Mehrzahl von Kombinationen, unter Einbeziehung der für die jeweilige Kombination ermittelten optimalen Reihenfolge ($R_{opt}$), eine entsprechend dem Optimierungskriterium optimale Kombination ermittelt wird (S100), die einer optimalen Fahrroute ($F_{opt}$) für diesen Bearbeitungsschritt entspricht; und
- automatisch Steuerdaten (D) zur Steuerung wenigstens einer Landmaschine (10) während eines Bearbeitungsschritts zu erzeugen (S230), wobei die Steuerdaten (D) die optimale Fahrroute ($F_{opt}$) repräsentieren,

**dadurch gekennzeichnet, dass**
die Mehrzahl von Kombinationen unterschiedliche Kombinationen einer einzigen Ausrichtung ($A_1$, $A_2$) mit unterschiedlichen Positionierungen ($P_1$-$P_4$) enthält.

15. Computersystem (1) nach Anspruch 14, **dadurch gekennzeichnet, dass** dieses extern bezüglich der wenigstens eine Landmaschine ausgebildet und dazu eingerichtet ist, die Steuerdaten (D) zur Übertragung an die wenigstens eine Landmaschine (10) zu erzeugen.

16. Landmaschine (10) mit einem Computersystem (1) zur Fahrroutenoptimierung bei einer Feldbearbeitung mit wenigstens einem Bearbeitungsschritt, bei welchem ein vorgegebener Bearbeitungsbereich (21) von einer Landmaschine (10) entsprechend einer Fahrroute ($F_1$-$F_5$) mit einer Mehrzahl paralleler Fahrspuren ($S_1$-$S_5$) durchfahren wird, wobei die Fahrroute ($F_1$-$F_5$) charakterisierbar ist durch eine Ausrichtung ($A_1$, $A_2$) der Fahrspuren ($S_1$-$S_5$), eine Positionierung ($P_1$-$P_4$), welche Positionen aller Fahrspuren ($S_1$-$S_5$) festlegt, sowie eine Reihenfolge ($R_1$-$R_5$), in welcher die Fahrspuren ($S_1$-$S_5$) durchfahren werden, wobei das Computersystem (1) dazu eingerichtet ist

  - für wenigstens einen Bearbeitungsschritt eine automatische Optimierung der Reihenfolge ($R_1$-$R_5$) für jede einer Mehrzahl von Kombinationen aus jeweils einer Ausrichtung ($A_1$, $A_2$) und einer Positionierung ($P_1$-$P_4$) durchzuführen (S150), indem aus einer Mehrzahl von Reihenfolgen ($R_1$-$R_5$) eine entsprechend einem definierten Optimierungskriterium zur Fahrroutenoptimierung für diese Kombination optimale Reihenfolge ($R_{opt}$) ermittelt wird;
  - für wenigstens einen Bearbeitungsschritt eine automatische Optimierung der Fahrroute ($F_1$-$F_5$) durchzuführen, indem aus der Mehrzahl von Kombinationen, unter Einbeziehung der für die jeweilige Kombination ermittelten optimalen Reihenfolge ($R_{opt}$), eine entsprechend dem Optimierungskriterium optimale Kombination ermittelt wird (S100), die einer optimalen Fahrroute ($F_{opt}$) für diesen Bearbeitungsschritt entspricht; und
  - automatisch Steuerdaten (D) zur Steuerung wenigstens einer Landmaschine (10) während eines Bearbeitungsschritts zu erzeugen (S230), wobei die Steuerdaten (D) die optimale Fahrroute ($F_{opt}$) repräsentieren,

  **dadurch gekennzeichnet, dass**
  die Mehrzahl von Kombinationen unterschiedliche Kombinationen einer einzigen Ausrichtung ($A_1$, $A_2$) mit unterschiedlichen Positionierungen ($P_1$-$P_4$) enthält.

17. Computerprogrammprodukt mit Programmcodemitteln, welche ein Computersystem (1) befähigen, das Verfahren nach einem der Ansprüche 1 bis 13 auszuführen.

## Claims

1. A method for performing driving route optimization in field cultivation having at least one cultivation step in which a predefined cultivation area (21) is driven through by an agricultural machine in accordance with a driving route ($F_1$-$F_5$) containing a plurality of parallel lanes ($S_1$-$S_5$), wherein the driving route ($F_1$-$F_5$) is able to be **characterized by** an orientation ($A_1$, $A_2$) of the lanes ($S_1$-$S_5$), a positioning ($P_1$-$P_4$) that defines positions of all of the lanes ($S_1$-$S_5$), and an order ($R_1$-$R_5$) in which the lanes ($S_1$-$S_5$) are driven through, wherein, the method comprising the steps of:

  performing, as a cultivation step, an automatic optimization of the order ($R_1$-$R_5$) for each of a plurality of combinations of in each case an orientation ($A_1$, $A_2$) and a positioning ($P_1$-$P_4$) by ascertaining, from a plurality of orders ($R_1$-$R_5$), an order ($R_{opt}$) that is optimum for this combination in accordance with a defined optimization criterion for performing driving route optimization;
  performing, as a cultivation step, an automatic optimization of the driving route ($F_1$-$F_5$) by ascertaining, from the plurality of combinations, incorporating the optimum order ($R_{opt}$) ascertained for the respective combination, a combination that is optimum in accordance with the optimization criterion and that corresponds to an optimum driving route ($F_{opt}$) for this cultivation step; and
  generating control data (D), for controlling at least one agricultural machine during a cultivation step, automatically, wherein the control data represent the optimum driving route ($F_{opt}$), wherein the plurality of combinations contains different combinations of a single orientation ($A_1$, $A_2$) with different positionings ($P_1$-$P_4$).

2. The method as claimed in claim 1, wherein the optimization criterion is based at least partially on an optimization of an optimization value that is ascertained by summing contributions of individual route sections of a driving route ($F_1$-$F_5$).

3. The method as claimed in claim 1, wherein the optimization criterion in each optimization takes into consideration both route sections of the lanes ($S_1$-$S_5$) and route sections of turning paths ($W_1$-$W_4$) connecting the lanes ($S_1$-$S_5$), wherein the

route sections of the turning paths ($W_1$-$W_4$) are taken into consideration on the basis of the respective order ($R_1$-$R_5$).

4. The method as claimed in claim 1, wherein the optimization criterion in each optimization takes into consideration a route section of a turning path ($W_1$-$W_4$) connecting two lanes ($S_1$-$S_5$) at least on the basis of a relative position of these lanes ($S_1$-$S_5$).

5. The method as claimed in claim 1, wherein, in order to optimize the driving route ($F_1$-$F_5$), an optimum positioning ($P_{opt}$) from a plurality of positionings ($P_1$-$P_4$) is ascertained (S130) for each of a plurality of orientations ($A_1$, $A_2$), and the optimum combination from a plurality of combinations of in each case one orientation ($A_1$, $A_2$) and the optimum positioning ($P_{opt}$) ascertained with respect thereto is ascertained.

6. The method as claimed in claim 1, wherein the optimization criterion takes into consideration each of a plurality of cultivation steps, such that the driving route ($F_1$-$F_5$) for the respective cultivation step is optimized on the basis of all cultivation steps, wherein the orientation ($A_1$, $A_2$) is the same for all cultivation steps.

7. The method as claimed in claim 1, wherein, in order to optimize the driving route ($F_1$-$F_5$), an optimum orientation ($A_{opt}$) from a plurality of orientations ($A_1$, $A_2$) is ascertained (S135) for each of a plurality of positionings ($P_1$-$P_4$), and the optimum combination from a plurality of combinations of in each case one positioning ($P_1$-$P_4$) and the optimum orientation ($A_{opt}$) ascertained with respect thereto is ascertained.

8. The method as claimed in claim 1, wherein the optimization criterion is based at least partially on minimizing a driving distance, minimizing a driving time and/or minimizing an energy consumption.

9. The method as claimed in claim 1, wherein the optimization criterion is based on optimizing a weighted combination of multiple optimization values.

10. The method as claimed in claim 1, wherein the optimization criterion is based on a Pareto optimization of multiple optimization values.

11. The method as claimed in claim 1, wherein the optimum driving route ($F_{opt}$) is ascertained externally for at least one agricultural machine and the control data (D) are generated externally and transmitted to the agricultural machine.

12. The method as claimed in claim 1, wherein control data (D) are generated for at least one self-driving agricultural machine, which performs at least one cultivation step autonomously based on the control data (D).

13. The method as claimed in claim 1, wherein control data (D) are generated for at least one agricultural machine steered by a driver, such that control instructions are able to be generated for the driver on the basis of the control data (D).

14. A computer system for performing driving route optimization in field cultivation having at least one cultivation step in which a predefined cultivation area is driven through by an agricultural machine in accordance with a driving route ($F_1$-$F_5$) containing a plurality of parallel lanes ($S_1$-$S_5$), wherein the driving route ($F_1$-$F_5$) is able to be **characterized by** an orientation ($A_1$, $A_2$) of the lanes ($S_1$-$S_5$), a positioning ($P_1$-$P_4$) that defines positions of all of the lanes ($S_1$-$S_5$), and an order ($R_1$-$R_5$) in which the lanes ($S_1$-$S_5$) are driven through, wherein the computer system is configured to perform the following steps:

   performing, as a cultivation step, an automatic optimization of the order ($R_1$-$R_5$) for each of a plurality of combinations of in each case an orientation ($A_1$, $A_2$) and a positioning ($P_1$-$P_4$) by ascertaining, from a plurality of orders ($R_1$-$R_5$), an order ($R_{opt}$) that is optimum for this combination in accordance with a defined optimization criterion for performing driving route optimization;
   performing, as a cultivation step, an automatic optimization of the driving route ($F_1$-$F_5$) by ascertaining, from the plurality of combinations, incorporating the optimum order ($R_{opt}$) ascertained for the respective combination, a combination that is optimum in accordance with the optimization criterion and that corresponds to an optimum driving route ($F_{opt}$) for this cultivation step; and
   automatically generating control data (D) for controlling at least one agricultural machine during a cultivation step, wherein the control data (D) represent the optimum driving route ($F_{opt}$), wherein the plurality of combinations contains different combinations of a single orientation ($A_1$, $A_2$) with different positionings ($P_1$-$P_4$).

15. The computer system as claimed in claim 14, wherein it is formed externally in relation to the at least one agricultural machine and is configured to generate the control data (D) for transmission to the at least one agricultural machine.

16. An agricultural machine having a computer system for performing driving route optimization in field cultivation having at least one cultivation step in which a predefined cultivation area is driven through by an agricultural machine in accordance with a driving route ($F_1$-$F_5$) containing a plurality of parallel lanes ($S_1$-$S_5$), wherein the driving route ($F_1$-$F_5$) is able to be **characterized by** an orientation ($A_1$, $A_2$) of the lanes ($S_1$-$S_5$), a positioning ($P_1$-$P_4$) that defines positions of all of the lanes ($S_1$-$S_5$), and an order ($R_1$-$R_5$) in which the lanes ($S_1$-$S_5$) are driven through, wherein the computer system (1) is configured,

> performing, as a cultivation step, an automatic optimization of the order ($R_1$-$R_5$) for each of a plurality of combinations of in each case an orientation ($A_1$, $A_2$) and a positioning ($P_1$-$P_4$) by ascertaining, from a plurality of orders ($R_1$-$R_5$), an order ($R_{opt}$) that is optimum for this combination in accordance with a defined optimization criterion for performing driving route optimization;
> performing, as a cultivation step, an automatic optimization of the driving route ($F_1$-$F_5$) by ascertaining, from the plurality of combinations, incorporating the optimum order ($R_{opt}$) ascertained for the respective combination, a combination that is optimum in accordance with the optimization criterion and that corresponds to an optimum driving route ($F_{opt}$) for this cultivation step; and
> automatically generating control data (D) for controlling at least one agricultural machine during a cultivation step, wherein the control data (D) represent the optimum driving route ($F_{opt}$), wherein the plurality of combinations contains different combinations of a single orientation ($A_1$, $A_2$) with different positionings ($P_1$-$P_4$).

17. A computer program product containing program code means that enable a computer system to carry out the method as claimed in claim 1.

## Revendications

1. Procédé d'optimisation d'itinéraire lors d'un traitement de champ comportant au moins une étape de traitement, dans laquelle une zone de traitement (21) prédéfinie est parcourue par une machine agricole (10) conformément à un itinéraire ($F_1$-$F_5$) comportant une pluralité de voies de circulation ($S_1$-$S_5$) parallèles, l'itinéraire ($F_1$-$F_5$) pouvant être **caractérisé par** une orientation ($A_1$, $A_2$) des voies de circulation ($S_1$-$S_5$), un positionnement ($P_1$-$P_4$) qui fixe les positions de toutes les voies de circulation ($S_1$-$S_5$), ainsi qu'un ordre ($R_1$-$R_5$) dans lequel les voies de circulation ($S_1$-$S_5$) sont parcourues, dans lequel

- pour au moins une étape de traitement, on effectue une optimisation automatique de l'ordre ($R_1$-$R_5$) pour chaque combinaison parmi une pluralité de combinaisons constituées respectivement d'une orientation ($A_1$, $A_2$) et d'un positionnement ($P_1$-$P_4$) (S150), en déterminant parmi une pluralité d'ordres ($R_1$-$R_5$) un ordre optimal ($R_{opt}$) pour ladite combinaison conformément à un critère d'optimisation défini pour l'optimisation d'itinéraire ;
- pour au moins une étape de traitement, on effectue une optimisation automatique de l'itinéraire ($F_1$-$F_5$), en déterminant parmi la pluralité de combinaisons, compte tenu de l'ordre optimal ($R_{opt}$) déterminé pour la combinaison respective, une combinaison optimale conformément au critère d'optimisation (S100), qui correspond à un itinéraire optimal ($F_{opt}$) pour ladite étape de traitement ; et
- on génère automatiquement des données de commande (D) pour la commande d'au moins une machine agricole (10) pendant une étape de traitement (S230), les données de commande représentant l'itinéraire optimal ($F_{opt}$),

**caractérisé en ce que**
la pluralité de combinaisons contient différentes combinaisons d'une seule orientation ($A_1$, $A_2$) avec différents positionnements ($P_1$-$P_4$).

2. Procédé selon la revendication 1, **caractérisé en ce que** le critère d'optimisation est basé au moins en partie sur une optimisation d'une valeur d'optimisation qui est déterminée par addition de contributions de tronçons de route individuels de l'itinéraire ($F_1$-$F_5$).

3. Procédé selon l'une des revendications précédentes,
**caractérisé en ce que** le critère d'optimisation prend en compte, lors de chaque optimisation, aussi bien des tronçons de route des voies de circulation ($S_1$-$S_5$) que des tronçons de route de trajets de virage ($W_1$-$W_4$) reliant les voies de circulation ($S_1$-$S_5$), les tronçons de route des trajets de virage ($W_1$-$W_4$) étant pris en compte en fonction de l'ordre ($R_1$-$R_5$) respectif.

4. Procédé selon l'une des revendications précédentes,
**caractérisé en ce que** le critère d'optimisation prend en compte, lors de chaque optimisation, un tronçon de route d'un trajet de virage ($W_1$-$W_4$) reliant deux voies de circulation ($S_1$-$S_5$), au moins en fonction d'une position relative desdites voies de circulation ($S_1$-$S_5$) .

5. Procédé selon l'une des revendications précédentes,

**caractérisé en ce que,** pour l'optimisation de l'itinéraire ($F_1$-$F_5$), on détermine pour chaque orientation parmi une pluralité d'orientations ($A_1$, $A_2$) un positionnement optimal ($P_{opt}$) parmi une pluralité de positionnements ($P_1$-$P_4$) (S130) et on détermine la combinaison optimale parmi une pluralité de combinaisons constituées respectivement d'une orientation ($A_1$, $A_2$) et du positionnement optimal ($P_{opt}$) déterminé à cet effet.

6. Procédé selon l'une des revendications précédentes,
**caractérisé en ce que** le critère d'optimisation prend en compte chaque étape parmi une pluralité d'étapes de traitement, en sorte que l'optimisation de l'itinéraire ($F_1$-$F_5$) pour l'étape de traitement respective a lieu en fonction de l'ensemble des étapes de traitement, l'orientation ($A_1$, $A_2$) étant la même pour toutes les étapes de traitement.

7. Procédé selon l'une des revendications précédentes,
**caractérisé en ce que,** pour l'optimisation de l'itinéraire ($F_1$-$F_5$), on détermine pour chaque positionnement parmi une pluralité de positionnements ($P_1$-$P_4$) une orientation optimale ($A_{opt}$) parmi une pluralité d'orientations ($A_1$, $A_2$) (S135) et on détermine la combinaison optimale parmi une pluralité de combinaisons constituées respectivement d'un positionnement ($P_1$-$P_4$) et de l'orientation optimale ($A_{opt}$) déterminée à cet effet.

8. Procédé selon l'une des revendications précédentes,
**caractérisé en ce que** le critère d'optimisation est basé au moins en partie sur une minimisation d'un parcours, une minimisation d'un temps de déplacement et/ou une minimisation d'une consommation d'énergie.

9. Procédé selon l'une des revendications précédentes,
**caractérisé en ce que** le critère d'optimisation est basé sur l'optimisation d'une combinaison pondérée de plusieurs valeurs d'optimisation.

10. Procédé selon l'une des revendications précédentes,
**caractérisé en ce que** le critère d'optimisation est basé sur une optimisation de Pareto de plusieurs valeurs d'optimisation.

11. Procédé selon l'une des revendications précédentes,
**caractérisé en ce que,** pour au moins une machine agricole (10), l'itinéraire optimal ($F_{opt}$) est déterminé de manière externe et les données de commande (D) sont générées de manière externe et transmises à la machine agricole (S240).

12. Procédé selon l'une des revendications précédentes,
**caractérisé en ce que** des données de commande (D) sont générées pour au moins une machine agricole (10) se déplaçant de manière autonome, qui effectue de manière autonome au moins une étape de traitement à l'aide des données de commande (D).

13. Procédé selon l'une des revendications précédentes,
**caractérisé en ce que** des données de commande (D) sont générées pour au moins une machine agricole (10) dirigée par un conducteur, en sorte que des instructions de commande pour le conducteur peuvent être générées à l'aide des données de commande (D).

14. Système informatique (1) pour l'optimisation d'itinéraire lors d'un traitement de champ comportant au moins une étape de traitement, dans laquelle une zone de traitement (21) prédéfinie est parcourue par une machine agricole (10) conformément à un itinéraire ($F_1$-$F_5$) comportant une pluralité de voies de circulation ($S_1$-$S_5$) parallèles, l'itinéraire ($F_1$-$F_5$) pouvant être
**caractérisé par** une orientation ($A_1$, $A_2$) des voies de circulation ($S_1$-$S_5$), un positionnement ($P_1$-$P_4$) qui fixe les positions de toutes les voies de circulation ($S_1$-$S_5$), ainsi qu'un ordre ($R_1$-$R_5$) dans lequel les voies de circulation ($S_1$-$S_5$) sont parcourues, le système informatique (1) étant conçu pour

- pour au moins une étape de traitement, effectuer une optimisation automatique de l'ordre ($R_1$-$R_5$) pour chaque combinaison parmi une pluralité de combinaisons constituées respectivement d'une orientation ($A_1$, $A_2$) et d'un positionnement ($P_1$-$P_4$) (S150), en déterminant parmi une pluralité d'ordres ($R_1$-$R_5$) un ordre optimal ($R_{opt}$) pour ladite combinaison, conformément à un critère d'optimisation défini pour l'optimisation d'itinéraire ;
- pour au moins une étape de traitement, effectuer une optimisation automatique de l'itinéraire ($F_1$-$F_5$), en déterminant parmi la pluralité de combinaisons, compte tenu de l'ordre optimal ($R_{opt}$) déterminé pour la combinaison respective, une combinaison optimale conformément au critère d'optimisation (S100), qui correspond à un itinéraire optimal ($F_{opt}$) pour ladite étape de traitement ; et
- générer automatiquement des données de commande (D) pour la commande d'au moins une machine agricole (10) pendant une étape de traitement (S230), les données de commande (D) représentant l'itinéraire optimal ($F_{opt}$),

**caractérisé en ce que**
la pluralité de combinaisons contient différentes combinaisons d'une seule orientation ($A_1$, $A_2$) avec différents positionnements ($P_1$-$P_4$).

**15.** Système informatique (1) selon la revendication 14, **caractérisé en ce qu'il** est réalisé de manière externe à l'au moins une machine agricole et conçu pour générer les données de commande (D) à transmettre à l'au moins une machine agricole (10).

**16.** Machine agricole (10) comportant un système informatique (1) pour l'optimisation d'itinéraire lors d'un traitement de champ comportant au moins une étape de traitement, dans laquelle une zone de traitement (21) prédéfinie est parcourue par une machine agricole (10) conformément à un itinéraire ($F_1$-$F_5$) comportant une pluralité de voies de circulation ($S_1$-$S_5$) parallèles, l'itinéraire ($F_1$-$F_5$) pouvant être **caractérisé par** une orientation ($A_1$, $A_2$) des voies de circulation ($S_1$-$S_5$), un positionnement ($P_1$-$P_4$) qui fixe les positions de toutes les voies de circulation ($S_1$-$S_5$), ainsi qu'un ordre ($R_1$-$R_5$) dans lequel les voies de circulation ($S_1$-$S_5$) sont parcourues, le système informatique (1) étant conçu pour

- pour au moins une étape de traitement, effectuer une optimisation automatique de l'ordre ($R_1$-$R_5$) pour chaque combinaison parmi une pluralité de combinaisons constituées respectivement d'une orientation ($A_1$, $A_2$) et d'un positionnement ($P_1$-$P_4$) (S150), en déterminant parmi une pluralité d'ordres ($R_1$-$R_5$) un ordre optimal ($R_{opt}$) pour ladite combinaison, conformément à un critère d'optimisation défini pour l'optimisation d'itinéraire ;
- pour au moins une étape de traitement, effectuer une optimisation automatique de l'itinéraire ($F_1$-$F_5$), en déterminant parmi la pluralité de combinaisons, compte tenu de l'ordre optimal ($R_{opt}$) déterminé pour la combinaison respective, une combinaison optimale conformément au critère d'optimisation (S100), qui correspond à un itinéraire optimal ($F_{opt}$) pour ladite étape de traitement ; et
- générer automatiquement des données de commande (D) pour la commande d'au moins une machine agricole (10) pendant une étape de traitement (S230), les données de commande (D) représentant l'itinéraire optimal ($F_{opt}$),

**caractérisé en ce que**
la pluralité de combinaisons contient différentes combinaisons d'une seule orientation ($A_1$, $A_2$) avec différents positionnements ($P_1$-$P_4$).

**17.** Produit programme d'ordinateur comportant des moyens de code de programme permettant à un système informatique (1) d'exécuter le procédé selon l'une des revendications 1 à 13.

# Fig.1

EP 4 245 107 B1

**Fig.2**

EP 4 245 107 B1

Fig.3

$S_1$ $S_2$ $S_3$ $W_2$ $S_4$ $S_5$ $W_4$ $W_1$ $F_2(A_1,P_1,R_2)$ $W_3$ 21 20 22 $P_1$

Y $A_1$ X

EP 4 245 107 B1

22

Fig.4

Fig.5

Fig.6

$F_5(A_1,P_4,R_5)$

$S_1$  $S_2$  $S_3$  $S_4$  $W_2$  $S_5$  $W_4$

$W_1$  21  $W_3$  22  20

$P_4$

Y  $A_1$  X

EP 4 245 107 B1

Fig.7

Fig.8

EP 4 245 107 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1602267 A2
- EP 3591488 A1
- US 20190208695 A1
- DE 102016121523 A1
- WO 2021025108 A1
- EP 3508045 A1